# EUROPEAN PATENT APPLICATION

(11) **EP 4 808 146 A1**
(43) Date of publication of application: **16.09.2026**
(21) Application number: 26163178.2
(22) Date of filing: 09.03.2026
(51) Int. Cl.: H04N 25/773, H04N 25/11, H04N 23/73, H04N 25/46, H04N 25/705

(54) **PHOTOELECTRIC CONVERSION DEVICE, PHOTODETECTION SYSTEM, MOVABLE OBJECT, AND EQUIPMENT**

(30) Priority: 14.03.2025 JP 2025041060
(71) Applicant: Canon Kabushiki Kaisha, Tokyo 146-8501 (JP)
(72) Inventor: OTA, Yasuharu, Ohta-ku, Tokyo 146-8501 (JP)
(74) Representative: TBK

(57) **Abstract**

A photoelectric conversion device (100) includes a photon detection circuit (24) configured to output a pulse signal in response to incidence of a photon, and a signal processing circuit (33A, 33B) connected to the photon detection circuit (24) and including a plurality of counters (34A, 34B) configured to count the pulse signal. The signal processing circuit (33A, 33B) is configured to output a threshold value reaching signal when a count value of each of the plurality of counters (34A, 34B) reaches a predetermined threshold value, and the photon detection circuit (24) is configured to stop outputting the pulse signal when receiving the threshold value reaching signal from each of the plurality of counters (34A, 34B).

## Description

### TECHNICAL FIELD

The present disclosure relates to a photoelectric conversion device, a photodetection system, a movable object, and an equipment.

### BACKGROUND

Japanese Patent Laid-Open No. 2022-096472 describes a technique of setting an exposure period in a plurality of counting processing units according to an occurrence pattern of an event in which photons are incident, in a photoelectric conversion device including a plurality of counting processing units arranged in parallel with a photoelectric conversion unit.

### SUMMARY

However, in Japanese Patent Laid-Open No. 2022-096472, a stop condition of the photoelectric conversion unit is not particularly described, and in a case where the operation of the photoelectric conversion unit is stopped before reaching a desired count threshold value, there is a possibility that a count loss occurs. On the other hand, in a case where the stop of the operation of the photoelectric conversion unit is late, information on the relative relationship among the count values in the plurality of count processing units may be lost.

The present disclosure is directed to provide a technique for appropriately controlling a count operation of each counter in a photoelectric conversion device including a plurality of counters in a pixel circuit.

The present disclosure in its first aspect provides a photoelectric conversion device as specified in claim 1. Optional features are specified in claims 2 to 6 and 11.

The present disclosure in its second aspect provides a photoelectric conversion device as specified in claim 7. Optional features are specified in claims 8 to 11.

The present disclosure in its third aspect provides a photodetection system as specified in claim 12. Optional features are specified in claim 13.

The present disclosure in its fourth aspect provides a movable object as specified in claim 14.

The present disclosure in its fifth aspect provides an equipment as specified in claim 15.

According to the present disclosure, it is possible to realize higher functionality in a photoelectric conversion device having a plurality of counters in a pixel circuit.

Features of the present disclosure will become apparent from the following description of embodiments with reference to the attached drawings. The following description of embodiments is described by way of example.

### BRIEF DESCRIPTION OF THE DRAWINGS

Fig. 1 and Fig. 2 are block diagrams illustrating a configuration example of a photoelectric conversion device according to a first embodiment.
Fig. 3 is a block diagram illustrating a configuration example of a pixel of the photoelectric conversion device according to the first embodiment.
Fig. 4A, Fig. 4B, Fig. 4C, Fig. 5A, Fig. 5B, Fig. 5C, and Fig. 5D are diagrams illustrating a basic operation of a photon detection circuit in the photoelectric conversion device according to the first embodiment.
Fig. 6 is a perspective view illustrating a configuration example of the photoelectric conversion device according to the first embodiment.
Fig. 7 is a timing chart illustrating a driving example of the photoelectric conversion device according to the first embodiment.
Fig. 8 is a plan view of a photoelectric conversion unit of a photoelectric conversion device according to a second embodiment.
Fig. 9 is a plan view illustrating an arrangement example of color filters in the photoelectric conversion device according to the second embodiment.
Fig. 10 is a block diagram illustrating a configuration example of a pixel of the photoelectric conversion device according to the second embodiment.
Fig. 11 is a timing chart illustrating a driving example of the photoelectric conversion device according to the second embodiment.
Fig. 12 is a plan view of a photoelectric conversion unit of a photoelectric conversion device according to a third embodiment.
Fig. 13 is a plan view illustrating an arrangement example of color filters in the photoelectric conversion device according to the third embodiment.
Fig. 14 is a plan view illustrating another arrangement example of the color filters in the photoelectric conversion device according to the third embodiment.
Fig. 15 is a block diagram illustrating a configuration example of a pixel of the photoelectric conversion device according to the third embodiment.
Fig. 16 is a timing chart illustrating a driving example of the photoelectric conversion device according to the third embodiment.
Fig. 17 is a block diagram illustrating a configuration example of a pixel of a photoelectric conversion device according to a fourth embodiment.
Fig. 18 is a timing chart illustrating a driving example of the photoelectric conversion device according to the fourth embodiment.
Fig. 19 is a block diagram illustrating a schematic configuration of a photodetection system according to a fifth embodiment.
Fig. 20 is a block diagram illustrating a schematic configuration of a range image sensor according to a sixth embodiment.
Fig. 21 is a schematic diagram illustrating a configuration example of an endoscopic surgical system according to a seventh embodiment.
Fig. 22A, Fig. 22B, and Fig. 22C are schematic diagrams illustrating a configuration example of a movable object according to an eighth embodiment.
Fig. 23 is a block diagram illustrating a schematic configuration of a photodetection system according to the eighth embodiment.
Fig. 24 is a flowchart illustrating an operation of the photodetection system according to the eighth embodiment.
Fig. 25A and Fig. 25B are schematic diagrams illustrating a schematic configuration of a photodetection system according to a ninth embodiment.
Fig. 26 is a block diagram illustrating a schematic configuration of an equipment according to a tenth embodiment.

### DESCRIPTION OF THE EMBODIMENTS

Hereinafter, embodiments of the present disclosure will be described in detail with reference to the accompanying drawings. The following embodiments are intended to embody the technical idea of the present disclosure and do not limit the technology of the present disclosure. Although a plurality of features is described in the embodiments, not all of the plurality of features are essential to the technology of the present disclosure, and the plurality of features may be arbitrarily combined.

In each of the embodiments described below, devices for imaging purposes will be mainly described as an example of a photoelectric conversion device. However, the embodiments are not limited to devices for imaging purposes and may be applied to other photoelectric conversion devices. For example, other examples of the photoelectric conversion device include a ranging device (a device for distance measurement and the like using a focus detection or a time of flight (TOF)), a photometric device (a device for measuring the amount of incident light), and the like.

In the following embodiments, connection between elements of a circuit may be described. In this case, even when another element is interposed between the elements of interest, the elements of interest are treated as being connected to each other unless otherwise specified. For example, it is assumed that an element A is connected to one node of a capacitor C having a plurality of nodes, and an element B is connected to the other node of the capacitor. Even in such a case, the element A and the element B are regarded as being connected to each other unless otherwise specified.

### First Embodiment

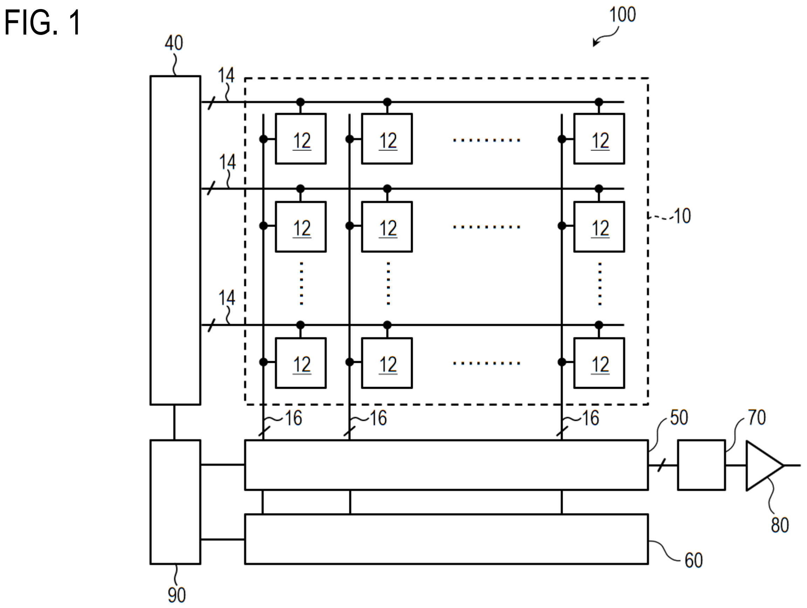

A schematic configuration of a photoelectric conversion device according to a first embodiment will be described with reference to Fig. 1. Fig. 1 is a block diagram illustrating a schematic configuration of a photoelectric conversion device according to the present embodiment.

As illustrated in Fig. 1, the photoelectric conversion device 100 according to the present embodiment includes a pixel region 10, a vertical scanning circuit unit 40, a readout circuit unit 50, a horizontal scanning circuit unit 60, a digital front end (DFE) 70, a transmitter circuit unit (TX) 80, and a control pulse generation unit 90.

The pixel region 10 is provided with a plurality of pixels 12 arranged in an array so as to form a plurality of rows and a plurality of columns. As described later, each of the plurality of pixels 12 may include a photoelectric conversion unit including a photoelectric conversion element and a signal processing unit that processes a signal output from the photoelectric conversion unit. The number of pixels 12 constituting the pixel region 10 is not particularly limited. For example, like a general digital camera, the pixel region 10 may be constituted by a plurality of pixels 12 arranged in an array of several thousand rows × several thousand columns. Alternatively, the pixel region 10 may include a plurality of pixels 12 arranged in one row or one column. Alternatively, one pixel 12 may constitute the pixel region 10. In addition, the pixel 12 may include a microlens and a color filter arranged on an optical path until incident light is guided to the photoelectric conversion element. The microlens focuses incident light on the photoelectric conversion element. The color filter selectively transmits light of a predetermined color.

In each row of the pixel array of the pixel region 10, a control line 14 is arranged so as to extend in a first direction (lateral direction in Fig. 1). Each of the control lines 14 is connected to the pixels 12 arranged in the first direction in the corresponding row, respectively, and forms a signal line common to these pixels 12. The first direction in which the control lines 14 extend may be referred to as a row direction or a horizontal direction. Each of the control lines 14 may include a plurality of signal lines for supplying a plurality of types of control signals to the pixels 12. The control line 14 of each row is connected to the vertical scanning circuit unit 40.

Further, in each column of the pixel array of the pixel region 10, an output line 16 is arranged so as to extend in a second direction (vertical direction in Fig. 1) intersecting the first direction. Each of the output lines 16 is connected to the pixels 12 arranged in the second direction in the corresponding column, respectively, and forms a signal line common to these pixels 12. The second direction in which the output lines 16 extend may be referred to as a column direction or a vertical direction. Each of the output lines 16 may include a plurality of signal lines. In the present embodiment, it is assumed that the output line 16 of each column includes two signal lines 16A and 16B. Each of the signal lines 16A and 16B may include a plurality of signal lines for transferring a digital signal of a plurality of bits output from the pixel 12 on a bit-by-bit basis.

The vertical scanning circuit unit 40 is a control circuit having a function of generating a control signal for driving the pixels 12 in response to a control signal output from the control pulse generation unit 90 and supplying the generated control signal to the pixels 12 via the control line 14. A logic circuit such as a shift register or an address decoder may be used as the vertical scanning circuit unit 40. The vertical scanning circuit unit 40 sequentially scans the pixels 12 in the pixel region 10 row by row to output the pixel signals of the pixels 12 to the readout circuit unit 50 via the output lines 16.

The output line 16 of each column is connected to the readout circuit unit 50. The readout circuit unit 50 includes a plurality of holding units (not illustrated) provided corresponding to each column of the pixel array of the pixel region 10 and has a function of holding the pixel signals of the pixels 12 of the respective columns output from the pixel region 10 in units of rows via the output lines 16 in the holding units of the corresponding columns.

The horizontal scanning circuit unit 60 is a control circuit having a function of generating a control signal for reading out a pixel signal from the holding unit of each column of the readout circuit unit 50 in response to a control signal output from the control pulse generation unit 90 and supplies the generated control signal to the readout circuit unit 50. A logic circuit such as a shift register or an address decoder may be used as the horizontal scanning circuit unit 60. The horizontal scanning circuit unit 60 sequentially scans the holding units of the respective columns of the readout circuit unit 50 to sequentially output the pixel signals held in the holding units to the DFE 70.

The DFE 70 is a signal processing circuit unit that performs predetermined digital signal processing on the pixel signal output from the readout circuit unit 50. The DFE 70 sequentially outputs the pixel signals subjected to the digital signal processing to the TX 80.

The TX 80 is a circuit unit for outputting the pixel signal output from the readout circuit unit 50 to the outside of the photoelectric conversion device 100 and includes an external interface circuit. The external interface circuit included in the TX 80 is not particularly limited. As the external interface circuit, for example, a SERializer/DESerializer (SerDes) transmission circuit may be applied. Examples of the SerDes transmission circuit include a low voltage differential signaling (LVDS) circuit and a scalable low voltage signaling (SLVS) circuit.

The control pulse generation unit 90 is a control circuit for generating control signals for controlling the operations and timings of the vertical scanning circuit unit 40, the readout circuit unit 50, and the horizontal scanning circuit unit 60, and supplying the generated control signals to each functional block. At least a part of the control signals for controlling the operations and timings of the vertical scanning circuit unit 40, the readout circuit unit 50, and the horizontal scanning circuit unit 60 may be supplied from the outside of the photoelectric conversion device 100.

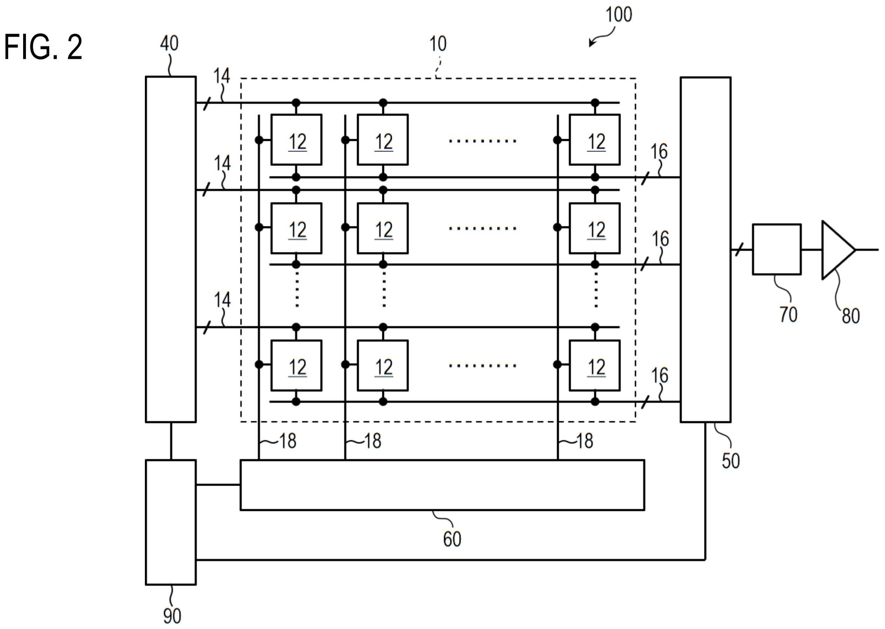

The connection mode of each functional block of the photoelectric conversion device 100 is not limited to the configuration example of Fig. 1 and may be configured as illustrated in, e.g., Fig. 2.

In the configuration example of Fig. 2, the output line 16 extending in the first direction is arranged in each row of the pixel array of the pixel region 10. Each of the output lines 16 is connected to the pixels 12 arranged in the first direction in the corresponding row, respectively, and forms a signal line common to these pixels 12. A control line 18 extending in the second direction is arranged in each column of the pixel array of the pixel region 10. Each of the control lines 18 is connected to the pixels 12 arranged in the second direction in the corresponding column, respectively, and forms a signal line common to these pixels 12.

The control line 18 of each column is connected to the horizontal scanning circuit unit 60. The horizontal scanning circuit unit 60 generates a control signal for reading out the pixel signal from the pixel 12 in response to a control signal output from the control pulse generation unit 90 and supplies the generated control signal to the pixel 12 via the control line 18. Specifically, the horizontal scanning circuit unit 60 sequentially scans the plurality of pixels 12 in the pixel region 10 in units of columns to output pixel signals of the pixels 12 in the respective rows belonging to the selected column to the output lines 16.

The output line 16 of each row is connected to the readout circuit unit 50. The readout circuit unit 50 includes a plurality of holding units (not illustrated) provided corresponding to the respective rows of the pixel array of the pixel region 10 and has a function of holding the pixel signals of the pixels 12 of the respective rows output from the pixel region 10 in units of columns via the output lines 16 in the holding units of the corresponding rows.

The readout circuit unit 50 sequentially outputs the pixel signals held in the holding units of the respective rows to the DFE 70 in response to a control signal output from the control pulse generation unit 90.

Other configurations in the configuration example of Fig. 2 may be the same as those in the configuration example of Fig. 1.

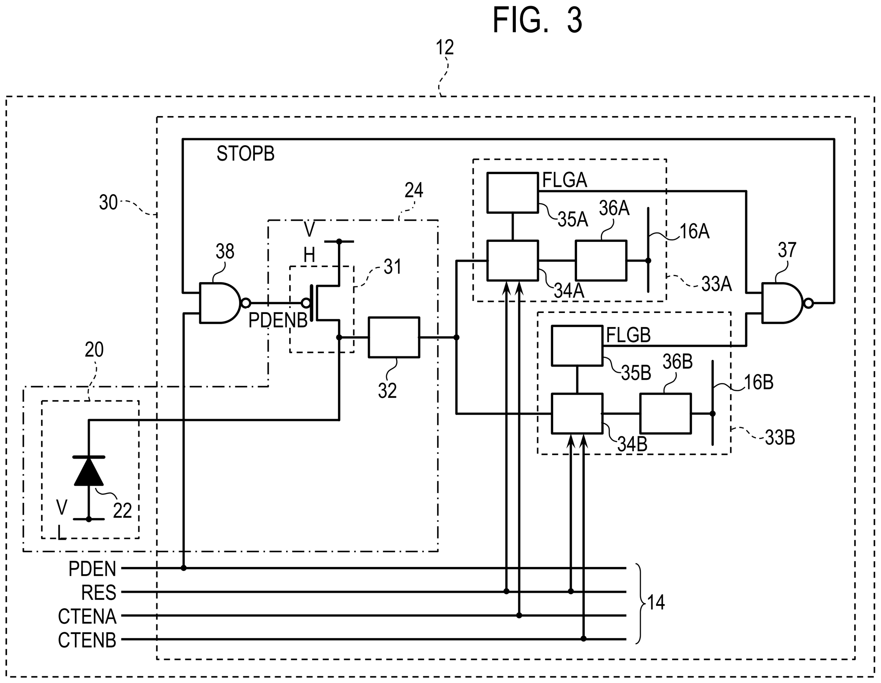

Fig. 3 is a block diagram illustrating a configuration example of the pixel 12 in the photoelectric conversion device according to the present embodiment. As illustrated in Fig. 3, each of the plurality of pixels 12 includes a photoelectric conversion unit 20 and a signal processing unit 30. The photoelectric conversion unit 20 includes a photoelectric conversion element 22 and outputs a signal according to incident light. The signal processing unit 30 includes a quenching circuit 31, a waveform shaping circuit 32, signal processing circuits 33A and 33B, a stop signal generation circuit 37, and an APD enabling circuit 38 and processes the signal output from the photoelectric conversion unit 20. The signal processing circuit 33A includes a counter 34A, a threshold value detection circuit 35A, and an output circuit 36A. The signal processing circuit 33B includes a counter 34B, a threshold value detection circuit 35B, and an output circuit 36B. Among these circuit elements constituting the pixel 12, a circuit block including the photoelectric conversion unit 20, the quenching circuit 31, and the waveform shaping circuit 32 may be referred to as a photon detection circuit 24 for convenience in this specification.

In the case of the pixel configuration illustrated in Fig. 3, the control line 14 of each row may include four signal lines for supplying control signals PDEN, RES, CTENA, and CTENB output from the vertical scanning circuit unit 40 to the pixels 12 of the corresponding row. Here, the control signal PDEN is an APD enabling signal for controlling the recharge operation of the photoelectric conversion element. The control signal RES is a counter reset signal for resetting the count values of the counters 34A and 34B. The control signal CTENA is a count enable signal for controlling a count operation period of the counter 34A. The control signal CTENB is a count enable signal for controlling a count operation period of the counter 34B.

The photoelectric conversion element 22 may be an avalanche photodiode (hereinafter referred to as "APD"). The quenching circuit 31 may be constituted by, for example, a p-channel MOS transistor. An anode of the APD constituting the photoelectric conversion element 22 is connected to a node to which a voltage VL is supplied. A cathode of the APD constituting the photoelectric conversion element 22 is connected to a drain of the p-channel MOS transistor constituting the quenching circuit 31 and an input node of the waveform shaping circuit 32. A source of the p-channel MOS transistor constituting the quenching circuit 31 is connected to a node to which a voltage VH higher than the voltage VL is supplied. The voltage VL and the voltage VH are set so that a reverse bias voltage sufficient for the APD to perform the avalanche multiplication operation is applied. In one example, a negative high voltage is applied as the voltage VL, and a positive voltage comparable to the power supply voltage is applied as the voltage VH. For example, the voltage VL may be -30 V, and the voltage VH may be 1 V.

The photoelectric conversion element 22 may be configured by an APD as described above. When a reverse bias voltage sufficient to perform the avalanche multiplication operation is supplied to the APD, carriers generated by light incident on the APD cause avalanche multiplication, and an avalanche current is generated. The operation modes in a state where the reverse bias voltage is supplied to the APD include a Geiger mode and a linear mode. The Geiger mode is an operation mode in which a voltage applied between the anode and the cathode is set to a reverse bias voltage larger than a breakdown voltage of the APD. The linear mode is an operation mode in which a voltage applied between the anode and the cathode is set to a reverse bias voltage close to or lower than the breakdown voltage of the APD. An APD that operates in Geiger mode is referred to as a single-photon avalanche diode (SPAD). The APD constituting the photoelectric conversion element 22 may be operated in the linear mode or in the Geiger mode, but the SPAD having a larger potential difference than the APD in the linear mode and having a remarkable improvement effect of the signal-to-noise ratio is more preferable.

Although the anode of the APD is set to a fixed potential and a signal is extracted from the cathode side in the circuit configuration of Fig. 3, the cathode of the APD may be set to a fixed potential and a signal may be extracted from the anode side. In the former case, the signal charge is an electron. In the latter case, the signal charge is a hole. Further, in the present embodiment, a case where one node of the APD is set to a fixed potential will be described, but the potentials of both nodes may vary. In the following description, a configuration in which electrons are used as the signal charge will be described.

The quenching circuit 31 has a function of converting a change in the avalanche current generated in the photoelectric conversion element 22 into a voltage signal. In addition, the quenching circuit 31 functions as a load circuit (quenching circuit) at the time of signal multiplication by avalanche multiplication and has a function of suppressing avalanche multiplication by reducing a voltage applied to the photoelectric conversion element 22. The operation in which the quenching circuit 31 suppresses avalanche multiplication is called a quenching operation. The quenching circuit 31 has a function of returning the voltage supplied to the photoelectric conversion element 22 to the voltage VH by flowing a current corresponding to the voltage drop due to the quenching operation. The operation of returning the voltage supplied from the quenching circuit 31 to the photoelectric conversion element 22 to the voltage VH is called a recharge operation. In this sense, the quenching circuit 31 may be referred to as a recharge circuit in this specification.

The waveform shaping circuit 32 has a function of converting an analog signal output from the photoelectric conversion unit 20 into a pulse signal. The waveform shaping circuit 32 may be constituted by a logic circuit including a NOT circuit (inverter circuit), a NOR circuit, a NAND circuit, or the like. An output node of the waveform shaping circuit 32 is connected to an input node of the counter 34A of the signal processing circuit 33A and an input node of the counter 34B of the signal processing circuit 33B. The output node of the waveform shaping circuit 32 is also an output node of the photon detection circuit 24. The input node of the counter 34A is also an input node of the signal processing circuit 33A, and the input node of the counter 34B is also an input node of the signal processing circuit 33B.

The counter 34A is connected to the threshold value detection circuit 35A and the output circuit 36A. The counter 34A receives the control signals RES and CTENA from the vertical scanning circuit unit 40. A threshold value reaching signal output node of the threshold value detection circuit 35A is connected to the stop signal generation circuit 37. Similarly, the counter 34B is connected to the threshold value detection circuit 35B and the output circuit 36B. The counter 34B receives the control signals RES and CTENB from the vertical scanning circuit unit 40. A threshold value reaching signal output node of the threshold value detection circuit 35B is connected to the stop signal generation circuit 37.

The counter 34A has a function of counting pulse signals output from the waveform shaping circuit 32 and holding a count value that is the counting result. The threshold value detection circuit 35A has a function of detecting that the count value of the counter 34A has reached a predetermined threshold value. When detecting that the count value of the counter 34A has reached the predetermined threshold value, the threshold value detection circuit 35A stops the count operation of the counter 34A and outputs the control signal FLGA from the threshold value reaching signal output node. Here, the control signal FLGA is a threshold value reaching signal for notifying that the count value of the counter 34A has reached the predetermined threshold value. The output circuit 36A has a function of outputting the count value of the counter 34A to the signal line 16A.

Similarly, the counter 34B has a function of counting pulse signals output from the waveform shaping circuit 32 and holding a count value that is the counting result. The threshold value detection circuit 35B has a function of detecting that the count value of the counter 34B has reached a predetermined threshold value. When detecting that the count value of the counter 34B has reached the predetermined threshold value, the threshold value detection circuit 35B stops the count operation of the counter 34B and outputs the control signal FLGB from the threshold value reaching signal output node. Here, the control signal FLGB is a threshold value reaching signal for notifying that the count value of the counter 34B has reached the predetermined threshold value. The output circuit 36B has a function of outputting the count value of the counter 34B to the signal line 16B.

As the threshold value detection circuits 35A and 35B, for example, a circuit that detects inversion of one or a plurality of bits of the counters 34A or 34B by an AND circuit or the like and outputs it as the control signal FLGA or FLGB may be considered. As a configuration in which the count operation in the counters 34A and 34B is stopped, for example, a logical conjunction operation result of the output signal of the waveform shaping circuit 32 and the inverted signal of the control signal FLGA or FLGB may be input to the counters 34A or 34B. With this configuration, it is possible to prevent the photon detection pulse signals from being output to the counters 34A and 34B after the count values of the counters 34A or 34B reaches the threshold value and the control signal FLGA or FLGB transitions to high-level.

The stop signal generation circuit 37 has a function of outputting a control signal STOPB for disabling the APD constituting the photoelectric conversion element 22 to the APD enabling circuit 38 when the count values of the counters 34A and 34B both reach the threshold value. The stop signal generation circuit 37 may be constituted by, for example, a two-input NAND circuit. In this case, the control signal FLGA from the threshold value detection circuit 35A and the control signal FLGB from the threshold value detection circuit 35B are input to input nodes of the NAND circuit constituting the stop signal generation circuit 37. The stop signal generation circuit 37 receives the high-level control signals FLGA and FLGB and outputs the low-level control signal STOPB, for example. An output node of the NAND circuit constituting the stop signal generation circuit 37 is connected to the APD enabling circuit 38.

The APD enabling circuit 38 has a function of controlling enabling and disabling of the APD constituting the photoelectric conversion element 22 according to the control signals PDEN and STOPB. The APD enabling circuit 38 may be constituted by, for example, a two-input NAND circuit. In this case, the control signal STOPB from the stop signal generation circuit 37 and the control signal PDEN from the vertical scanning circuit unit 40 are input to input nodes of the NAND circuit constituting the APD enabling circuit 38. An output node of the NAND circuit constituting the APD enabling circuit 38 is connected to a gate of the p-channel MOS transistor constituting the quenching circuit 31. The gate of the p-channel MOS transistor constituting the quenching circuit 31 is also a control node of the photon detection circuit 24. A signal output from the APD enabling circuit 38 to the quenching circuit 31 is a control signal PDENB.

The pixel 12 is typically a unit structure that outputs a pixel signal for forming an image. However, in the case of aiming at distance measurement using a time of flight (TOF) method, the pixel 12 does not necessarily need to be a unit structure that outputs a pixel signal for forming an image. That is, the pixel 12 may be a unit structure that outputs a signal for measuring the time at which light arrives and the amount of light.

One signal processing unit 30 is not necessarily provided for each pixel 12, and one signal processing unit 30 may be provided for a plurality of pixels 12. In this case, the signal processing of the plurality of pixels 12 may be sequentially performed using one signal processing unit 30.

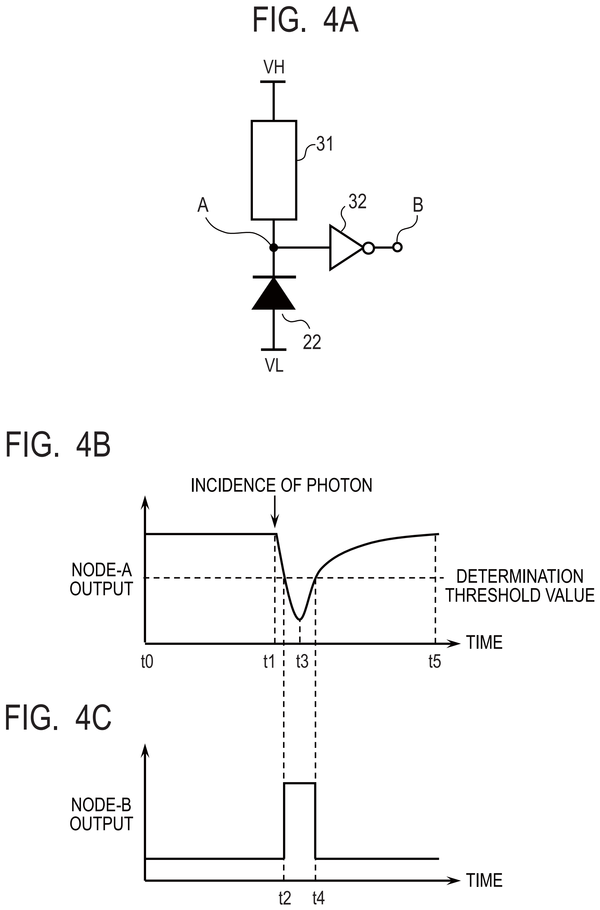

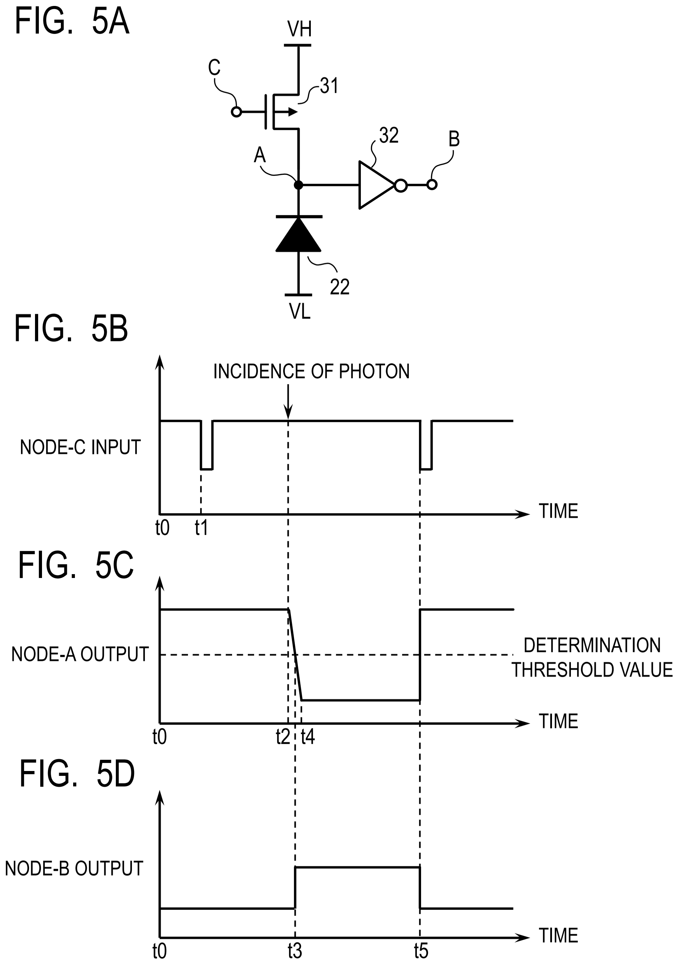

Next, a basic operation of the photon detection circuit 24 in the photoelectric conversion device according to the present embodiment will be described with reference to Fig. 4A to Fig. 5D. Fig. 4A to Fig. 5D are diagrams illustrating the basic operation of the photon detection circuit 24 in the photoelectric conversion device according to the present embodiment. Fig. 4A to Fig. 4C illustrate a case where passive recharge driving is applied as a driving method of the photoelectric conversion element 22, and Fig. 5A to Fig. 5D illustrate a case where clock recharge driving is applied as a driving method of the photoelectric conversion element 22. Here, in order to simplify the description, it is assumed that the waveform shaping circuit 32 is constituted by an inverter circuit.

First, an operation in the case where passive recharge driving is applied as a driving method of the photoelectric conversion element 22 will be described. Fig. 4A is a circuit diagram of the photon detection circuit 24. Fig. 4B illustrates the waveform of the signal at the input node (node-A) of the waveform shaping circuit 32. Fig. 4C illustrates the waveform of the signal at the output node (node-B) of the waveform shaping circuit 32.

At time t0, a reverse bias voltage having a potential difference corresponding to (VH-VL) is applied to the photoelectric conversion element 22. Although a reverse bias voltage sufficient to cause avalanche multiplication is applied between the anode and the cathode of the APD constituting the photoelectric conversion element 22, carriers serving as seeds of avalanche multiplication do not exist in a state where photons are not incident on the photoelectric conversion element 22. Therefore, avalanche multiplication does not occur in the photoelectric conversion element 22, and no current flows through the photoelectric conversion element 22.

At the subsequent time t1, it is assumed that a photon is incident on the photoelectric conversion element 22. When a photon enters the photoelectric conversion element 22, an electron-hole pair is generated by photoelectric conversion, avalanche multiplication occurs using these carriers as seeds, and an avalanche multiplication current flows through the photoelectric conversion element 22. When the avalanche multiplication current flows through the quenching circuit 31, a voltage drop occurs due to the quenching circuit 31, and the voltage of the node-A starts to drop. When the voltage drop amount of the node-A becomes large and the avalanche multiplication is stopped at time t3, the voltage level of the node-A no longer drops.

When the avalanche multiplication in the photoelectric conversion element 22 stops, a current that compensates for the voltage drop flows from the node of the voltage VH to the node-A via the quenching circuit 31, and the voltage of the node-A gradually increases. Thereafter, at time t5, the node-A is settled to the original voltage level. That is, the recharge operation of the photoelectric conversion element 22 is performed.

The waveform shaping circuit 32 binarizes the signal input from the node-A according to a predetermined determination threshold value and outputs the signal from the node-B. Specifically, the waveform shaping circuit 32 outputs a low-level signal from the node-B when the voltage level of the node-A exceeds the determination threshold value, and outputs a high-level signal from the node-B when the voltage level of the node A is equal to or less than the determination threshold value. For example, as illustrated in Fig. 4B, it is assumed that the voltage of the node-A is equal to or lower than the determination threshold value in the period from the time t2 to the time t4. In this case, as illustrated in Fig. 4C, the signal level at the node-B becomes low-level in the period from the time t0 to the time t2 and the period from the time t4 to the time t5 and becomes high-level in the period from the time t2 to the time t4.

Thus, the analog signal input from the node-A is waveform-shaped into a digital signal by the waveform shaping circuit 32. A pulse signal output from the waveform shaping circuit 32 in response to incidence of a photon on the photoelectric conversion element 22 is a photon detection pulse signal.

When the quenching circuit 31 is formed of a p-channel MOS transistor as in the present embodiment, the above-described operation may occur when the p-channel MOS transistor is in the on-state, that is, when the control signal PDENB is at low-level. That is, during the period in which the p-channel MOS transistor is in the on-state, the above-described operation is repeatedly performed in accordance with the incidence of photons, and a plurality of photon detection pulse signals may be output. On the other hand, when the p-channel MOS transistor is in the off-state, that is, when the control signal PDENB is at high-level, the photoelectric conversion element 22 is not recharged, and thus the number of times the photon detection pulse signal is output from the photon detection circuit 24 is at most one. In the present embodiment, enabling the APD means controlling the control signal PDENB to low-level, and disabling the APD means controlling the control signal PDENB to high-level.

Next, an operation in the case of applying the clock recharge driving as the driving method of the photoelectric conversion element 22 will be described. Fig. 5A is a circuit diagram of the photon detection circuit 24. Fig. 5B illustrates the waveform of the signal at the input node (node-C) of the quenching circuit 31. Fig. 5C illustrates the waveform of the signal at the input node (node-A) of the waveform shaping circuit 32. Fig. 5D illustrates the waveform of the signal at the output node (node-B) of the waveform shaping circuit 32.

In the circuit of Fig. 5A, the quenching circuit 31 is formed of a p-channel MOS transistor. A source of the p-channel MOS transistor is connected to the node of the voltage VH, and a drain of the p-channel MOS transistor is connected to the cathode of the photoelectric conversion element 22 and the input node of the waveform shaping circuit 32. A connection node between the drain of the p-channel MOS transistor, the cathode of the photoelectric conversion element 22, and the input node of the waveform shaping circuit 32 is a node-A. As illustrated in Fig. 5B, for example, a periodic pulse signal (hereinafter referred to as a reset pulse signal) is input to a gate (node-C) of the p-channel MOS transistor. The reset pulse signal is a falling pulse that transitions from high-level to low-level. The p-channel MOS transistor is turned off when the node-C is at high-level to disconnect the node-A from the node of the voltage VH, and is turned on when the node-C is at low-level to reset the node-A to the voltage VH.

When a reset pulse signal is input to the node-C at time t1, the p-channel MOS transistor is turned on, and the node-A is reset to the voltage VH. When the node-C returns to high-level, the p-channel MOS transistor is turned off, and the node-A enters a floating state at the voltage VH.

At the subsequent time t2, it is assumed that a photon is incident on the photoelectric conversion element 22. When a photon enters the photoelectric conversion element 22, an electron-hole pair is generated by photoelectric conversion, avalanche multiplication occurs using these carriers as seeds, and an avalanche multiplication current flows through the photoelectric conversion element 22. When this avalanche multiplication current flows through the quenching circuit 31, a voltage drop occurs by the quenching circuit 31, and the voltage of the node-A starts to drop. When the voltage drop amount of the node-A becomes large and becomes approximately Vex, avalanche multiplication is stopped at time t4, and the voltage level of the node-A does not drop any more. The potential at which the avalanche multiplication is stopped is about 0 V, that is, a potential at which the voltage applied to the photoelectric conversion element 22 is about Vbd. The node-A enters a floating state while being kept at a lowered potential.

When the reset pulse signal is input to the node-C again at time t5, the p-channel MOS transistor is turned on, and the node-A is reset to the voltage VH again.

The waveform shaping circuit 32 binarizes the signal input from the node-A according to a predetermined determination threshold value, and outputs the signal from the node-B. Specifically, the waveform shaping circuit 32 outputs a low-level signal from the node-B when the voltage level of the node-A exceeds the determination threshold value and outputs a high-level signal from the node-B when the voltage level of the node-A is equal to or less than the determination threshold value. For example, as illustrated in Fig. 5C, it is assumed that the voltage of the node-A is equal to or lower than the determination threshold value in the period from the time t3 to the time t5. In this case, as illustrated in Fig. 5D, the signal level at the node-B becomes low-level in the period from the time t0 to the time t3 and the period after the time t5, and becomes high-level in the period from the time t3 to the time t5.

Thus, the analog signal input from the node-A is waveform-shaped into a digital signal by the waveform shaping circuit 32. A pulse signal output from the waveform shaping circuit 32 in response to incidence of a photon on the photoelectric conversion element 22 is a photon detection pulse signal.

In the operation of Fig. 5B to Fig. 5D, if no photon is incident between the time t1 and the time t5, the node-A remains at the voltage VH, and the node-B remains at low-level. In addition, in a case where the photon is incident again during a period from the time when the photon is incident at the time t2 to the time t5, that is, in a state where the potential of the node-A is lowered, the photoelectric conversion element 22 cannot cause further avalanche multiplication. Therefore, the number of incidences of photons that can be detected by the waveform shaping circuit 32 in the period from the time t1 to the time t5 is one at the maximum.

As described above, in the operation of Fig. 5B to Fig. 5D, it is possible to distinguish whether the number of photons incident during one period of the reset pulse signal is 0 or 1 or more. On the other hand, when two or more photons are incident during one period of the reset pulse signal, these photons cannot be distinguished from each other, and there is a possibility that a signal detection loss occurs.

In the case where the photons are incident from the next to the next without interruption, in the operation of Fig. 4B and Fig. 4C, the avalanche multiplication in the photoelectric conversion element 22 does not stop and the avalanche current continues to flow, that is, a so-called pile-up state is obtained. In this pile-up state, the photon detection pulse signal is not generated, and only the current may flow wastefully.

On the other hand, in the operation of Fig. 5B to Fig. 5D, when two or more photons are incident during one period of the reset pulse signal, these photons cannot be distinguished from each other, but there is an advantage that pile-up that may occur in the operation of Fig. 4B and Fig. 4C does not occur. Although signal detection loss may certainly occur in the operation of Fig. 5B to Fig. 5D, the SPAD originally aims at photon detection in a situation where photon incidence is small, and in such a situation, it is rare that photons are incident a plurality of times during one reset pulse period, and signal detection loss hardly occurs. Therefore, particularly when SPAD is used as an image sensor, the operation of Fig. 5B to Fig. 5D is often applied.

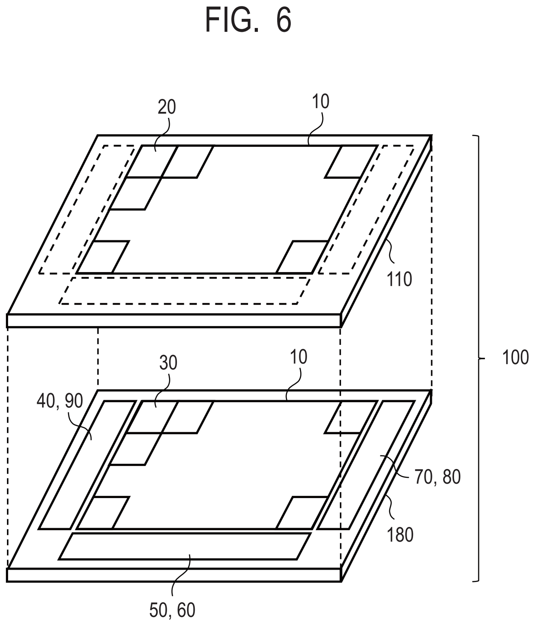

The photoelectric conversion device 100 according to the present embodiment may be formed on one substrate or may be configured as a stacked-type photoelectric conversion device in which a plurality of substrates are stacked. In the latter case, as illustrated in, e.g., Fig. 6, the photoelectric conversion device may be configured as a stacked-type photoelectric conversion device in which a sensor substrate 110 and a circuit substrate 180 are stacked and electrically connected to each other.

The pixel region 10 may be provided in each of the sensor substrate 110 and the circuit substrate 180 so as to overlap each other in a plan view. At least the photoelectric conversion unit 20 among the constituent elements of the pixels 12 may be arranged on the sensor substrate 110. The signal processing unit 30 among the constituent elements of the pixels 12 may be arranged on the circuit substrate 180. The photoelectric conversion unit 20 and the signal processing unit 30 of each of the plurality of pixels 12 constituting the pixel region 10 may be provided on the sensor substrate 110 and the circuit substrate 180 so as to overlap each other in the plan view. The photoelectric conversion unit 20 and the signal processing unit 30 are electrically connected to each other via an interconnection (not illustrated) provided for each pixel 12. Here, the term "plan view" refers to a view from a direction perpendicular to the surface of the sensor substrate 110.

The circuit substrate 180 may further include the vertical scanning circuit unit 40, the readout circuit unit 50, the horizontal scanning circuit unit 60, the DFE 70, the TX 80, and the control pulse generation unit 90. The vertical scanning circuit unit 40, the readout circuit unit 50, the horizontal scanning circuit unit 60, the DFE 70, the TX 80, and the control pulse generation unit 90 may be arranged around the pixel region 10 on the circuit substrate 180. These functional blocks may be provided on one of the sensor substrate 110 and the circuit substrate 180 or may be provided by being divided into the sensor substrate 110 and the circuit substrate 180.

By constituting the stacked-type photoelectric conversion device 100, it is possible to increase the degree of integration of elements and achieve higher functionality. In particular, by arranging the photoelectric conversion unit 20 and the signal processing unit 30 on different substrates, the photoelectric conversion elements 22 may be arranged at high density without sacrificing the light receiving area of the photoelectric conversion elements 22, and the photon detection efficiency may be improved. In addition, by arranging the peripheral circuit on the substrate different from the substrate on which the photoelectric conversion unit 20 is arranged, it is possible to increase the circuit scale and to achieve higher functionality of the peripheral circuit.

In Fig. 6, a diced chip is assumed as the sensor substrate 110 and the circuit substrate 180, but the sensor substrate 110 and the circuit substrate 180 are not limited to chips. For example, each of the sensor substrate 110 and the circuit substrate 180 may be a wafer. In addition, the sensor substrate 110 and the circuit substrate 180 may be stacked in a wafer state and then diced, or may be stacked and bonded after being formed into chips. The number of substrates constituting the stacked-type photoelectric conversion device is not necessarily two, and may be three or more.

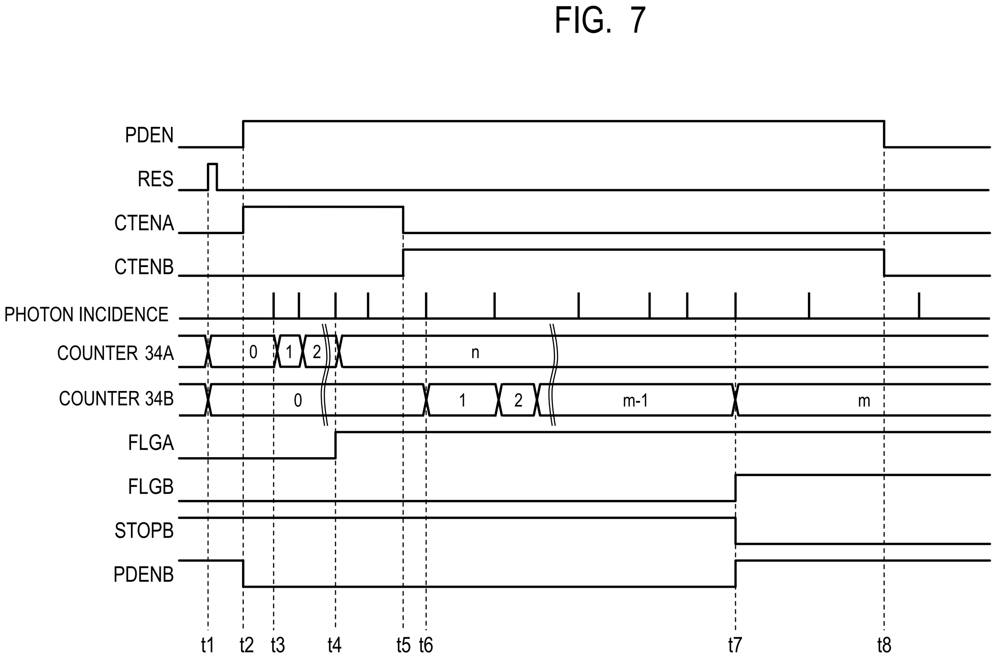

Next, a driving example of the photoelectric conversion device according to the present embodiment will be described with reference to Fig. 7. Fig. 7 is a timing chart illustrating a driving example of the photoelectric conversion device according to the present embodiment.

Fig. 7 illustrates a driving example in which a photon detection pulse signal output from one photoelectric conversion element 22 is distributed to two counters 34A and 34B. Such driving may be applied to, for example, an application for generating a high dynamic range image. In this case, for example, a multiple exposure operation in which the counter 34A records the count value during the short exposure period and the counter 34B records the count value during the long exposure period may be performed.

Fig. 7 illustrates waveforms of the control signals PDEN, RES, CTENA, CTENB, FLGA, FLGB, STOPB and PDENB, timings of photon incidence, and count values of the counters 34A and 34B.

At time t1, the vertical scanning circuit unit 40 controls the control signal RES to high-level. As a result, the count values of the counter 34A and the counter 34B are reset to 0. The control signal FLGA output from the threshold value detection circuit 35A and the control signal FLGB output from the threshold value detection circuit 35B become low-level upon receiving the count value 0, and the control signal STOPB output from the stop signal generation circuit 37 becomes high-level.

At the subsequent time t2, the vertical scanning circuit unit 40 controls the control signal PDEN to high-level and starts the exposure period. As a result, the control signal PDENB output from the APD enabling circuit 38 becomes low-level, and the p-channel MOS transistor constituting the quenching circuit 31 is turned on. As a result, the photoelectric conversion element 22 is recharged to a state in which avalanche multiplication in the Geiger mode is possible.

At the time t2, the vertical scanning circuit unit 40 also controls the control signal CTENA to high-level. Accordingly, the counter 34A is enabled, and the photon detection pulse signal output from the waveform shaping circuit 32 in response to photon incidence may be counted by the counter 34A.

At the subsequent time t3, it is assumed that a photon is incident on the photoelectric conversion element 22. Then, the count value of the enabled counter 34A is counted up from 0 to 1 in response to the photon detection pulse signal output from the waveform shaping circuit 32. At this time, since the counter 34B is not enabled, the count value of the counter 34B remains 0.

After the time t3, the count value of the counter 34A is incremented by one every time the photon detection pulse signal output from the waveform shaping circuit 32 is received in response to the photon incident on the photoelectric conversion element 22.

At the subsequent time t4, it is assumed that the count value of the counter 34A reaches a predetermined threshold value n (n is an arbitrary integer). When detecting that the count value of the counter 34A has reached the threshold value n, the threshold value detection circuit 35A stops the count operation of the counter 34A and controls the control signal FLGA from low-level to high-level. After the time t4 when the count value reaches the threshold value n, the counter 34A does not count up the count value even if the photon detection pulse signal is received regardless of the level of the control signal CTENA. The counter 34A holds the count value n after the time t4.

At the subsequent time t5, the vertical scanning circuit unit 40 controls the control signal CTENA to low-level and controls the control signal CTENB to high-level. As a result, the counter 34A is disabled, the counter 34B is enabled, and the photon detection pulse signal output from the waveform shaping circuit 32 in response to photon incidence may be counted by the counter 34B.

At the subsequent time t6, it is assumed that a photon is incident on the photoelectric conversion element 22. Then, the count value of the enabled counter 34B is counted up from 0 to 1 in response to the photon detection pulse signal output from the waveform shaping circuit 32.

After the time t5, the count value of the counter 34B is incremented by one every time the photon detection pulse signal output from the waveform shaping circuit 32 is received in response to the photon incident on the photoelectric conversion element 22. At this time, since the counter 34A is not enabled, the count value of the counter 34A remains n.

At the subsequent time t7, it is assumed that the count value of the counter 34B reaches a predetermined threshold value m (m is an arbitrary integer). When detecting that the count value of the counter 34B has reached the threshold value m, the threshold value detection circuit 35B stops the count operation of the counter 34B and controls the control signal FLGB from low-level to high-level. After the time t7 when the count value reaches the threshold value m, the counter 34B does not count up the count value even if the photon detection pulse signal is received regardless of the level of the control signal CTENB. The counter 34B holds the count value m after the time t7. The threshold value m may be the same as or different from the threshold value n.

At the time t7, both the control signals FLGA and FLGB are high-level, so that the control signal STOPB transits from high-level to low-level. Here, the control signal STOPB is an inverted signal, and low-level indicates an active (stopped) state. When the control signal STOPB transitions to low-level, the control signal PDENB, which is the output signal of the APD enabling circuit 38, becomes high-level, and the p-channel MOS transistor constituting the quenching circuit 31 is turned off. As a result, the recharge operation of the photoelectric conversion element 22 is stopped.

At the subsequent time t8, the vertical scanning circuit unit 40 controls the control signals PDEN and CTENB to low-level. As a result, the counter 34B is disabled, and the exposure period ends.

After the time t8, the count values held by the counters 34A and 34B are read out to the readout circuit unit 50 via the output circuits 36A and 36B and the signal lines 16A and 16B.

As described above, in the present embodiment, the photoelectric conversion element 22 is disabled when the count values of all the counters 34A and 34B reach the threshold values even during the exposure period. This makes it possible to prevent wasteful power consumption due to the avalanche multiplication operation that does not contribute to the count operation.

In the present embodiment, the recharge operation of the photoelectric conversion element 22 is not stopped even when the count value of the counter 34A reaches the threshold value, and the recharge operation of the photoelectric conversion element 22 is stopped after the count value of the counter 34B reaches the threshold value. This is because, in the case where a plurality of counters is connected to the photoelectric conversion element, if the operation of the photoelectric conversion element is stopped based only on the threshold value reaching information of one counter, there is a possibility that a count loss occurs in the counter that has not reached the threshold value. According to the present embodiment, it is possible to avoid a count loss in a counter that has not reached the threshold value, for example, the counter 34B.

As described above, according to the present embodiment, the operation of the photoelectric conversion element is stopped after each of the plurality of counters obtains the desired count value, whereby it is possible to reduce power consumption and appropriately control the count operation of each counter. As a result, it is possible to realize higher functionality of the photoelectric conversion device.

Although the driving example in which the count period of the counter 34A and the count period of the counter 34B do not overlap is described in the present embodiment, at least a part of the count period of the counter 34A and the count period of the counter 34B may overlap. Otherwise, the length of the count period of the counter 34A and the length of the count period of the counter 34B may be set to be the same, and these count periods may be sequentially executed to perform driving for improving the frame rate in a pseudo manner.

Although Fig. 7 illustrates an example in which passive recharge driving is applied as the driving method of the photoelectric conversion element 22, clock recharge driving may be applied as the driving method of the photoelectric conversion element 22. In this case, the control signal PDEN may be a periodic pulse signal, and the control signal PDENB input to the quenching circuit 31 during the effective period of the photoelectric conversion element 22 may have a waveform as illustrated in Fig. 5B. The same applies to the following embodiments.

### Second Embodiment

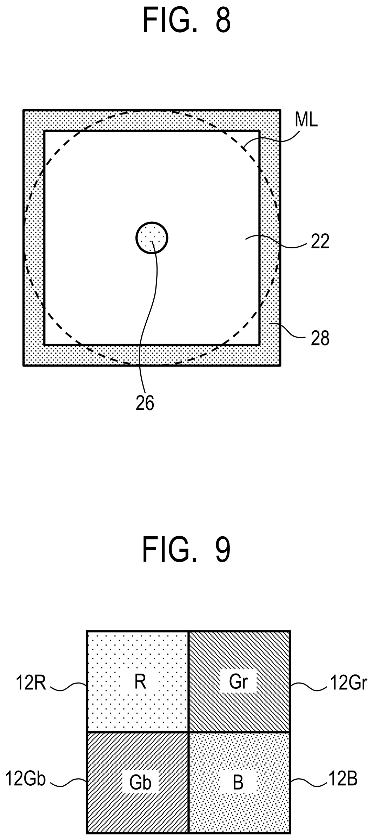

A photoelectric conversion device and a method of driving the same according to a second embodiment will be described with reference to Fig. 8 to Fig. 11. The same components as those of the photoelectric conversion device according to the first embodiment are denoted by the same reference numerals, and description thereof will be omitted or simplified.

The photoelectric conversion device according to the present embodiment is the same as the photoelectric conversion device according to the first embodiment except that the configuration of the pixel 12 is different. In the present embodiment, differences from the photoelectric conversion device according to the first embodiment will be mainly described, and description of points similar to those of the photoelectric conversion device according to the first embodiment will be appropriately omitted.

Fig. 8 is a plan view of the photoelectric conversion element 22 and the microlens ML included in one pixel 12. The photoelectric conversion element 22 includes an APD formed of a p-n junction between an n-type semiconductor region and a p-type semiconductor region provided in a semiconductor substrate. A cathode electrode 26 connected to the cathode of the APD, an anode electrode (not illustrated) connected to the anode of the APD, and the like are provided on the semiconductor substrate in which the photoelectric conversion element 22 is arranged. An isolation region 28 for electrically isolating adjacent photoelectric conversion elements 22 from each other is provided around the photoelectric conversion elements 22. The isolation method of the isolation region 28 may be a p-n junction separation or an insulator isolation using silicon oxide or the like. The microlens ML is provided on an optical path of light incident on the photoelectric conversion element 22 to cover the photoelectric conversion element 22.

Fig. 9 is a diagram illustrating an arrangement example of the pixels 12 in the photoelectric conversion device according to the present embodiment. Fig. 9 illustrates four pixels 12 arranged in a matrix of two rows and two columns among the plurality of pixels 12 constituting the pixel region 10.

In Fig. 9, the color of the color filter included in each pixel 12 is represented by any one of R, Gr, Gb, and B. The pixel 12 labeled "R" is a pixel 12 provided with a red filter having a transmission wavelength range in the red-light wavelength range. The pixel 12 to which "Gr" or "Gb" is attached is a pixel 12 including a green filter having a transmission wavelength range in a green-light wavelength range. The pixel 12 labeled "B" is a pixel 12 provided with a blue filter having a transmission wavelength range in the blue-light wavelength range. Note that Gr indicates the pixel 12 arranged in the same row as the pixel 12 provided with the red filter among the pixels 12 provided with the green filter. Gb indicates the pixel 12 arranged in the same row as the pixel 12 provided with the blue filter among the pixels 12 provided with the green filter. Hereinafter, the pixel 12 sensitive to red light may be referred to as a pixel 12R, the pixel 12 sensitive to green light may be referred to as a pixel 12Gr or a pixel 12Gb, and the pixel 12 sensitive to blue light may be referred to as a pixel 12B. When the pixel 12Gr and the pixel 12Gb are comprehensively indicated, they may be referred to as a pixel 12G.

The pixels 12R, 12G, and 12B may be arranged in a so-called Bayer array. In the Bayer array, for example, as illustrated in Fig. 8, in a pixel block of 2 rows × 2 columns which is a minimum repetition unit, two G pixels are arranged at one diagonal position, and an R pixel and a B pixel are arranged at the other diagonal position. The pixel region 10 is configured by repeatedly arranging the pixel blocks in the row direction and the column direction.

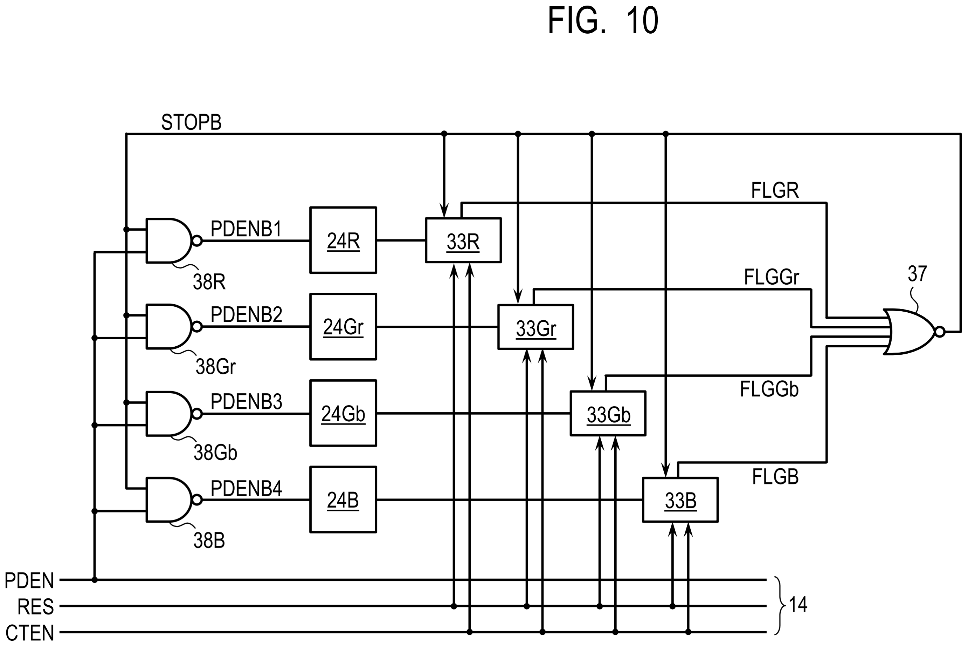

Fig. 10 is a block diagram illustrating a configuration example of the pixel 12 in the photoelectric conversion device according to the present embodiment. In the photoelectric conversion device according to the present embodiment, a pixel circuit is constituted using the above-described pixel block as a basic unit. That is, the pixel circuit illustrated in Fig. 10 includes the pixel 12R, the pixel 12Gr, the pixel 12Gb, and the pixel 12B. In the case of the pixel configuration illustrated in Fig. 10, the control line 14 may include three signal lines for supplying the control signals PDEN, RES, and CTEN output from the vertical scanning circuit unit 40. The control line 14 may be arranged for each pixel block row corresponding to the above-described pixel block.

The pixel 12R includes a photon detection circuit 24R, a signal processing circuit 33R, and an APD enabling circuit 38R. The pixel 12Gr includes a photon detection circuit 24Gr, a signal processing circuit 33Gr, and an APD enabling circuit 38Gr. The pixel 12Gb includes a photon detection circuit 24Gb, a signal processing circuit 33Gb, and an APD enabling circuit 38Gb. The pixel 12B includes a photon detection circuit 24B, a signal processing circuit 33B, and an APD enabling circuit 38B. The internal configuration of the photon detection circuits 24R, 24Gr, 24Gb, and 24B may be the same as that of the photon detection circuit 24 of the first embodiment. The internal configuration of the signal processing circuits 33R, 33Gr, 33Gb, and 33B may be the same as that of the signal processing circuit 33A or 33B of the first embodiment. The pixel 12R, the pixel 12Gr, the pixel 12Gb, and the pixel 12B share one stop signal generation circuit 37.

An output node of the photon detection circuit 24R is connected to an input node of the signal processing circuit 33R. A threshold value reaching signal output node of a threshold value detection circuit included in the signal processing circuit 33R is connected to the stop signal generation circuit 37. An output node of the photon detection circuit 24Gr is connected to an input node of the signal processing circuit 33Gr. A threshold value reaching signal output node of a threshold value detection circuit included in the signal processing circuit 33Gr is connected to the stop signal generation circuit 37. An output node of the photon detection circuit 24Gb is connected to an input node of the signal processing circuit 33Gb. A threshold value reaching signal output node of a threshold value detection circuit included in the signal processing circuit 33Gb is connected to the stop signal generation circuit 37. An output node of the photon detection circuit 24B is connected to an input node of the signal processing circuit 33B. A threshold value reaching signal output node of a threshold value detection circuit included in the signal processing circuit 33B is connected to the stop signal generation circuit 37.

The stop signal generation circuit 37 has a function of outputting a control signal STOPB for disabling the APD when the count value of any of the counters of the signal processing circuits 33R, 33Gr, 33Gb, and 33B reaches a predetermined threshold value. The stop signal generation circuit 37 may be configured by, for example, a four-input NOR circuit. The control signals FLGR, FLGGr, FLGGB, and FLGB from the signal processing circuits 33R, 33Gr, 33Gb, and 33B are input to input nodes of the NOR circuits constituting the stop signal generation circuit 37. An output node of the NOR circuits constituting the stop signal generation circuit 37 is connected to the signal processing circuits 33R, 33Gr, 33Gb, and 33B and the APD enabling circuits 38R, 38Gr, 38Gb, and 38B. The stop signal generation circuit 37 outputs a low-level control signal STOPB when any of the control signals FLGR, FLGGr, FLGGB, and FLGB is at high-level. Upon receiving the low-level control signal STOPB, the signal processing circuits 33R, 33Gr, 33Gb, and 33B stop the count operation of the counter.

The APD enabling circuits 38R, 38Gr, 38Gb, and 38B have a function of controlling enabling and disabling of APDs constituting the photoelectric conversion elements 22 of the photon detection circuits 24R, 24Gr, 24Gb, and 24B in accordance with the control signals PDEN and STOPB. Each of the APD enabling circuits 38R, 38Gr, 38Gb, and 38B may be configured by, for example, a two-input NAND circuit. The control signal STOPB from the stop signal generation circuit 37 and the control signal PDEN from the vertical scanning circuit unit 40 are input to input nodes of the NAND circuit constituting each of the APD enabling circuits 38R, 38Gr, 38Gb, and 38B. A signal output from the APD enabling circuit 38R to a control node of the photon detection circuit 24R is a control signal PDENB1. A signal output from the APD enabling circuit 38Gr to a control node of the photon detection circuit 24Gr is a control signal PDENB2. A signal output from the APD enabling circuit 38Gb to a control node of the photon detection circuit 24Gb is a control signal PDENB3. A signal output from the APD enabling circuit 38B to a control node of the photon detection circuit 24B is a control signal PDENB4. Upon receiving the high-level control signals PDENB1, PDENB2, PDENB3, or PDENB4, the corresponding photon detection circuit 24R, 24Gr, 24Gb, or 24B stops the recharge operation of the photoelectric conversion element 22.

In the first embodiment, the stop signal generation circuit 37 is constituted by a NAND circuit. On the other hand, in the present embodiment, the stop signal generation circuit 37 is constituted by a NOR circuit. Therefore, in the pixel circuit of the present embodiment, unlike the first embodiment, when the count value of any of the counters of the signal processing circuits 33R, 33Gr, 33Gb, and 33B reaches a predetermined threshold value, all of the counters and all of the photon detection circuits 24 in the pixel block stop operating. Specifically, when any of the control signals FLGR, FLGGr, FLGGb, and FLGB from the signal processing circuits 33R, 33Gr, 33Gb, and 33B becomes high-level, the control signal STOPB becomes low-level (stop signal). When the low-level control signal STOPB is input to the photon detection circuits 24R, 24Gr, 24Gb, or 24B via the APD enabling circuits 38R, 38Gr, 38Gb, and 38B, the recharge operations of the photoelectric conversion elements 22 are stopped. When the low-level control signal STOPB is input to the signal processing circuits 33R, 33Gr, 33Gb, and 33B, the count operations of the counters are stopped.

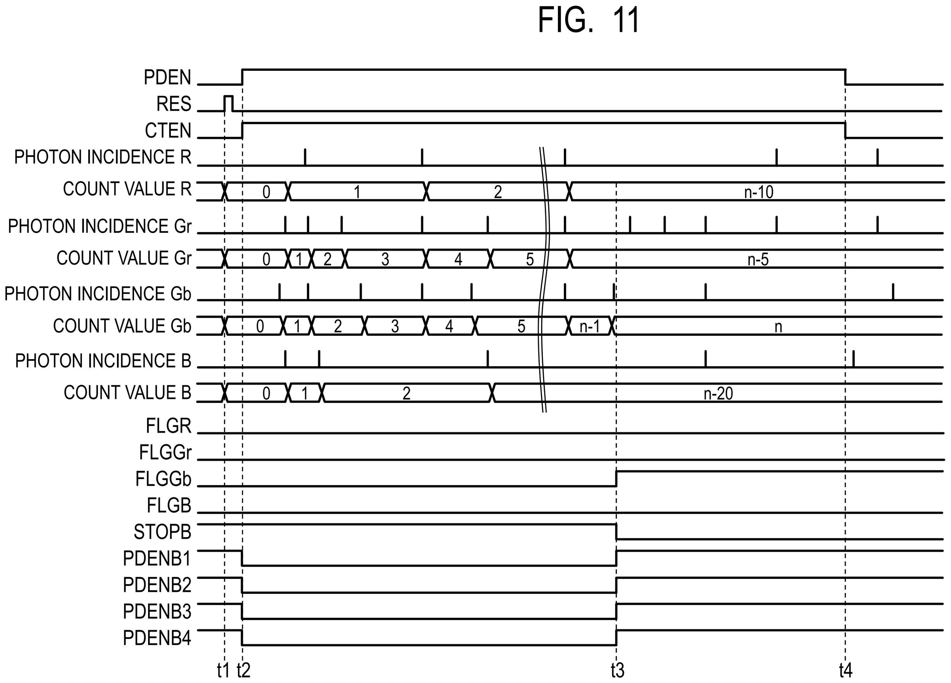

Next, a driving example of the photoelectric conversion device according to the present embodiment will be described with reference to Fig. 11. Fig. 11 is a timing chart illustrating a driving example of the photoelectric conversion device according to the present embodiment.

Fig. 11 illustrates waveforms of the control signals PDEN, RES, CTEN, FLGR, FLGGr, FLGGb, FLGB, STOPB, PDENB1, PDENB2, PDENB3 and PDENB4, timings of photon incidence, and count values of the counters. In Fig. 11, "photon incidence R" indicates a photon incidence timing to the photoelectric conversion element 22 of the photon detection circuit 24R, and "photon incidence Gr" indicates a photon incidence timing to the photoelectric conversion element 22 of the photon detection circuit 24Gr. The "photon incidence Gb" indicates the photon incidence timing to the photoelectric conversion element 22 of the photon detection circuit 24Gb, and the "photon incidence B" indicates the photon incidence timing to the photoelectric conversion element 22 of the photon detection circuit 24B. Further, the "count value R" indicates the count value of the counter of the signal processing circuit 33R, and the "count value Gr" indicates the count value of the counter of the signal processing circuit 33Gr. The "count value Gb" indicates the count value of the counter of the signal processing circuit 33Gb, and the "count value B" indicates the count value of the counter of the signal processing circuit 33B.

At time t1, the vertical scanning circuit unit 40 controls the control signal RES to high-level. As a result, the count values of the counters of the signal processing circuits 33R, 33Gr, 33Gb, and 33B are reset to 0. The control signals FLGR, FLGGr, FLGGb, and FLGB output from the signal processing circuits 33R, 33Gr, 33Gb, and 33B become low-level in response to the count value 0, and the control signal STOPB output from the stop signal generation circuit 37 becomes high-level.

At the subsequent time t2, the vertical scanning circuit unit 40 controls the control signal PDEN to high-level and starts the exposure period. As a result, the control signals PDENB1, PDENB2, PDENB3, and PDENB4 become low-level, and the operations of the photon detection circuits 24R, 24Gr, 24Gb, and 24B are enabled. At the time t2, the vertical scanning circuit unit 40 also controls the control signal CTEN to high-level. Accordingly, the count operation of the counters of the signal processing circuits 33R, 33Gr, 33Gb, and 33B is enabled.

After the time t2, the counter of each of the signal processing circuits 33R, 33Gr, 33Gb, and 33B counts up the count value by one every time the photon detection pulse signal output from the corresponding photon detection circuits 24R, 24Gr, 24Gb, and 24B is received.

It is assumed that the count value of the counter of the signal processing circuit 33Gb among the count values of the counters of the signal processing circuits 33R, 33Gr, 33Gb, and 33B reaches a predetermined threshold value n (n is an arbitrary integer) earliest at the subsequent time t3. When detecting that the count value of the counter has reached the threshold value n, the signal processing circuit 33Gb stops the count operation of the counter and controls the control signal FLGGb from low-level to high-level. As a result, the control signal STOPB becomes low-level, and the count operations of the counters of the signal processing circuits 33R, 33Gr, 33Gb, and 33B are stopped. The counters of the signal processing circuits 33R, 33Gr, 33Gb, and 33B hold the count values after the time t3. Further, the control signals PDENB1, PDENB2, PDENB3, and PDENB4 become high-level in response to the low-level control signal STOPB, and the operations of the photon detection circuits 24R, 24Gr, 24Gb, and 24B are stopped.

At the subsequent time t4, the vertical scanning circuit unit 40 controls the control signals PDEN and CTENB to low-level. This completes the exposure period.

After the time t4, the count values held by the signal processing circuits 33R, 33Gr, 33Gb, and 33B are read out to the readout circuit unit 50 via the output lines 16. It is possible to generate a color image by performing demosaic processing on the pixel signals corresponding to the respective colors in the DFE 70 or an external processing circuit of the photoelectric conversion device.

In the case of compositing a color image by restoring color information from the count values of the respective pixels of RGB, if counting is continued by the counters of the pixels of other colors even after the counters of the pixels of a specific color are saturated, there is a possibility that the ratio of the colors is lost. In this regard, in the present embodiment, all the count values of the counters of the pixel 12R, the pixel 12Gr, the pixel 12Gb, and the pixel 12B may be stopped at the threshold value or less, whereby it is possible to output the count values while maintaining the relative relationship between the count values of these pixels 12.

In the present embodiment, as in the first embodiment, the photoelectric conversion elements 22 are disabled when the count value of any of the counters of the signal processing circuits 33R, 33Gr, 33Gb, and 33B reaches the threshold value even during the exposure period. This makes it possible to prevent wasteful power consumption due to the avalanche multiplication operation that does not contribute to the count operation.

As described above, according to the present embodiment, the operations of the photoelectric conversion elements and the counters are stopped by detecting that the count value of any of the plurality of counters has reached the predetermined threshold value, whereby it is possible to reduce power consumption and appropriately control the count operation of each counter.

### Third Embodiment

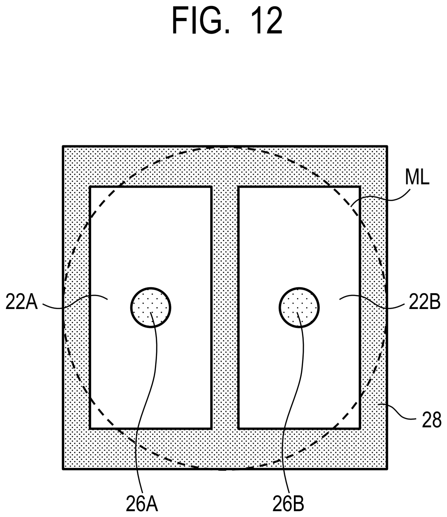

A photoelectric conversion device and a method of driving the same according to a third embodiment will be described with reference to Fig. 12 to Fig. 16. The same components as those of the photoelectric conversion device according to the first or second embodiment are denoted by the same reference numerals, and description thereof will be omitted or simplified.

The photoelectric conversion device according to the present embodiment is the same as the photoelectric conversion device according to the first or second embodiment except that the configuration of the pixel 12 is different. In the present embodiment, differences from the photoelectric conversion device according to the first or second embodiment will be mainly described, and description of points similar to those of the photoelectric conversion device according to the first or second embodiment will be appropriately omitted.

In the present embodiment, each of the plurality of pixels 12 constituting the pixel region 10 includes two photoelectric conversion elements 22A and 22B and one microlens ML. Fig. 12 is a plan view of the photoelectric conversion elements 22A and 22B and the microlens ML included in one pixel 12. As illustrated in Fig. 12, the two photoelectric conversion elements 22A and 22B of one pixel 12 are arranged adjacent to each other in the first direction (horizontal direction in the drawing) and share one microlens ML. In other words, the photoelectric conversion element 22A and the photoelectric conversion element 22B are configured to receive light that has passed through different pupil regions among light incident on the imaging optical system.

Each of the photoelectric conversion elements 22A and 22B includes an APD formed of a p-n junction between an n-type semiconductor region and a p-type semiconductor region provided in a semiconductor substrate. A cathode electrode 26A connected to the cathode of the APD constituting the photoelectric conversion element 22A, an anode electrode (not illustrated) connected to the anode of the APD, and the like are provided on the semiconductor substrate in which the photoelectric conversion element 22A is arranged. Similarly, a cathode electrode 26B connected to the cathode of the APD constituting the photoelectric conversion element 22B, an anode electrode (not illustrated) connected to the anode of the APD, and the like are provided on the semiconductor substrate in which the photoelectric conversion element 22B is arranged. Around each of the photoelectric conversion elements 22A and 22B, an isolation region 28 for electrically isolating the adjacent photoelectric conversion elements 22 from each other is provided. The isolation method of the isolation region 28 may be a p-n junction isolation or an insulator isolation using silicon oxide or the like. The microlens ML is provided on an optical path of light incident on the photoelectric conversion elements 22A and 22B so as to cover the photoelectric conversion elements 22A and 22B.

By constituting the pixel 12 in this manner, a signal obtained by adding a signal output from the photoelectric conversion element 22A and a signal output from the photoelectric conversion element 22B may be used as an imaging signal. The phase difference may be detected by comparing the signal output from the photoelectric conversion element 22A with the signal output from the photoelectric conversion element 22B. A method of performing focusing using this phase difference is called an image plane phase difference detection method. In a case where the photoelectric conversion elements 22A and 22B are arranged adjacent to each other in the horizontal direction, a signal from the photoelectric conversion element on the left side may be referred to as an A-image signal, and a signal from the photoelectric conversion element on the right side may be referred to as a B-image signal. When the photoelectric conversion elements 22A and 22B are arranged adjacent to each other in the vertical direction, a signal from the photoelectric conversion element on the upper side may be referred to as a C-image signal, and a signal from the photoelectric conversion element on the lower side may be referred to as a D-image signal.

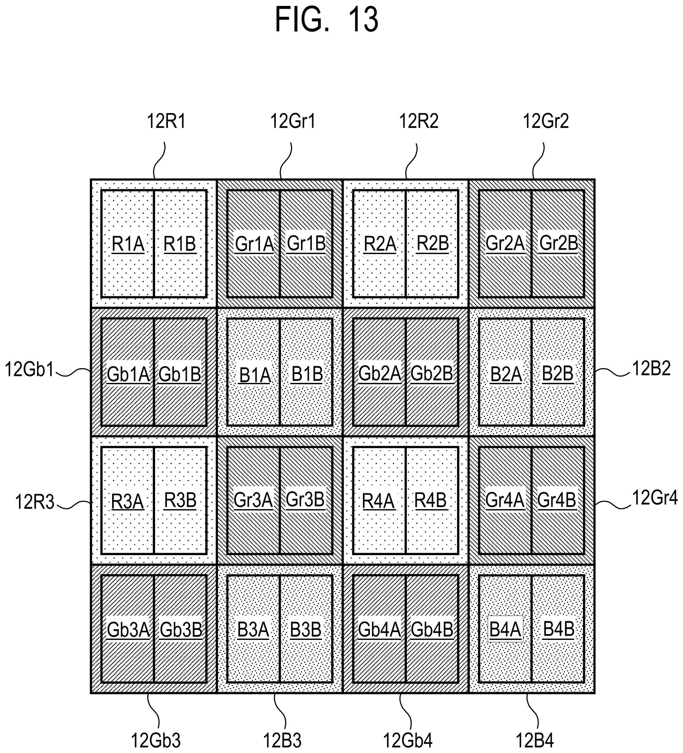

Fig. 13 is a diagram illustrating an arrangement example of the pixels 12 in the photoelectric conversion device according to the present embodiment. Fig. 13 illustrates 16 pixels 12 arranged in a matrix of 4 rows × 4 columns among the plurality of pixels 12 constituting the pixel region 10. These pixels 12 are arranged in the Bayer array as in the second embodiment. In Fig. 13, in order to distinguish the pixels 12 of the same color, a serial number is given to each color of the color filters included in the pixels 12. For example, reference numerals 12R1 and 12R2 are given to the two pixels 12R in the first row, and reference numerals 12Gr1 and 12Gr2 are given to the two Gr pixels in the first row. Further, two reference numerals attached to each pixel 12 represent two photoelectric conversion elements included in the pixel 12. For example, the pixel 12R1 includes a photoelectric conversion element R1A and a photoelectric conversion element R1B.

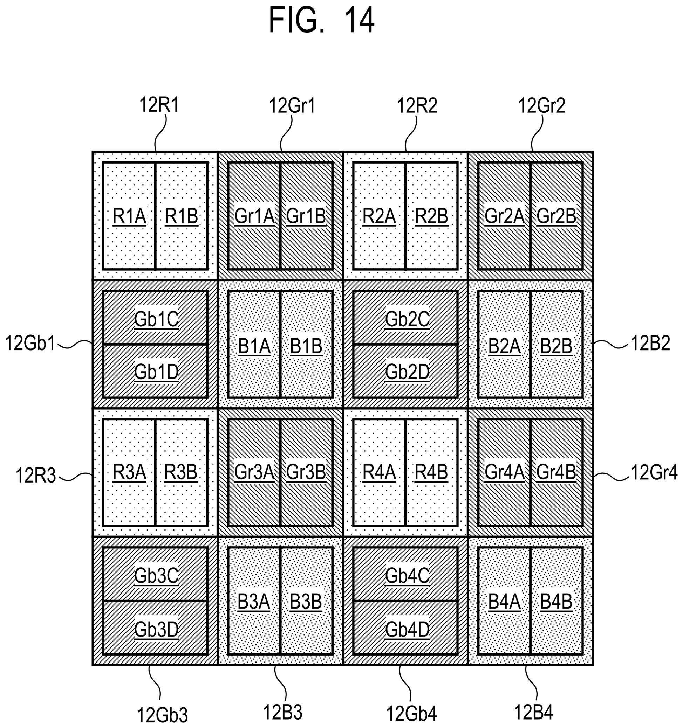

Fig. 14 is a diagram illustrating another arrangement example of the pixels 12 in the photoelectric conversion device according to the present embodiment. While two photoelectric conversion elements included in the pixel 12Gb are arranged in the horizontal direction in Fig. 13, two photoelectric conversion elements included in the pixel 12Gb are arranged in the vertical direction in Fig. 14. The other points are the same as those of the arrangement of Fig. 13. In the present embodiment, the division directions of the pixels 12 of the same color may be the same, and the division direction of each color pixel is not particularly limited.

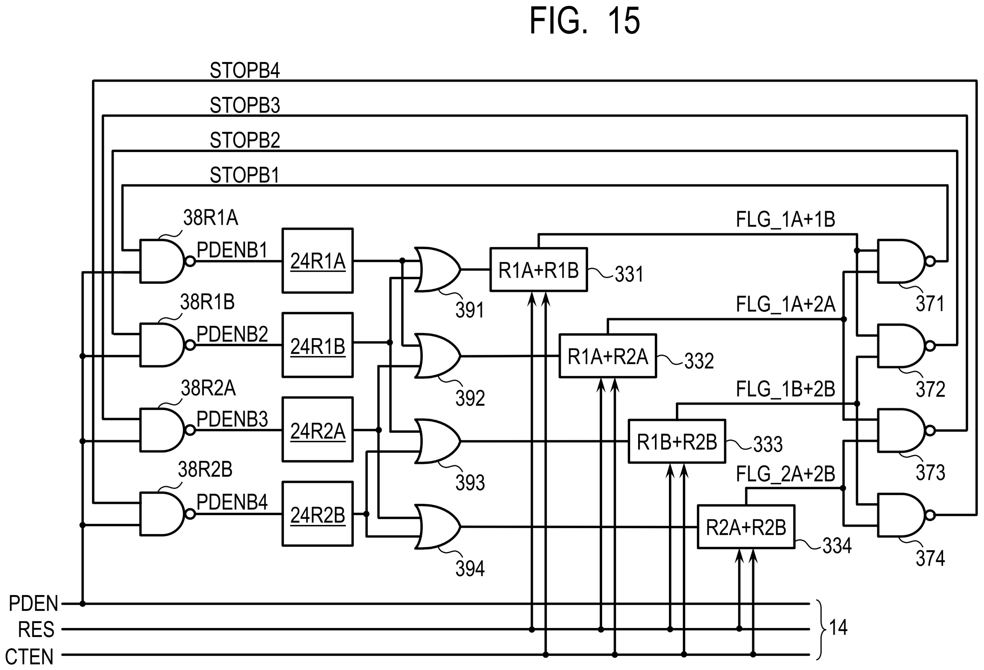

Fig. 15 is a block diagram illustrating a configuration example of the pixels 12 in the photoelectric conversion device according to the present embodiment. In the photoelectric conversion device according to the present embodiment, a pixel circuit is constituted by a pixel block including two or more pixels 12 of the same color as a basic unit. In the case of the pixel layout of Fig. 13, the pixel 12R1 and the pixel 12R2 may constitute one pixel block, and the pixel 12Gr1 and the pixel 12Gr2 may constitute another one pixel block, for example. Fig. 15 illustrates a pixel circuit of a pixel block including the pixel 12R1 and the pixel 12R2 among the pixel blocks configured as described above. In the case of the pixel configuration illustrated in Fig. 15, the control line 14 arranged in each row may include three signal lines for supplying the control signals PDEN, RES, and CTEN output from the vertical scanning circuit unit 40. The number of pixels 12 constituting one pixel block is not particularly limited. Further, the pixels 12 constituting one pixel block are preferably arranged in the vicinity but are not necessarily arranged in the same row and may be arranged in the same column.

The pixel 12R1 includes photon detection circuits 24R1A and 24R1B and APD enabling circuits 38R1A and 38R1B. The photon detection circuit 24R1A includes a photoelectric conversion element R1A as the photoelectric conversion element 22, and the photon detection circuit 24R1B includes a photoelectric conversion element R1B as the photoelectric conversion element 22. The pixel 12R2 includes photon detection circuits 24R2A and 24R2B, and APD enabling circuits 38R2A and 38R2B. The photon detection circuit 24R2A includes a photoelectric conversion element R2A as the photoelectric conversion element 22, and the photon detection circuit 24R2B includes a photoelectric conversion element R2B as the photoelectric conversion element 22. Other internal configurations of the photon detection circuits 24R1A, 24R1B, 24R2A and 24R2B may be similar to those of the photon detection circuit 24 of the first embodiment. The pixels 12R1 and 12R2 share the signal processing circuits 331, 332, 333 and 334, the stop signal generation circuits 371, 372, 373 and 374, and the signal integration circuits 391, 392, 393 and 394. The internal configuration of the signal processing circuits 331, 332, 333 and 334 may be the same as that of the signal processing circuit 33A or 33B of the first embodiment.

The signal integration circuits 391, 392, 393 and 394 have a function of integrating the output signals from the photon detection circuit 24R1A, 24R1B, 24R2A and 24R2B. Each of the signal integration circuits 391, 392, 393 and 394 may be constituted by a two-input OR circuit, for example. Two input nodes of the NOR circuit constituting the signal integration circuit 391 are connected to an output node of the photon detection circuit 24R1A and an output node of the photon detection circuit 24R1B. Two input nodes of the NOR circuit constituting the signal integration circuit 392 are connected to an output node of the photon detection circuit 24R1A and an output node of the photon detection circuit 24R2A. Two input nodes of the NOR circuit constituting the signal integration circuit 393 are connected to an output node of the photon detection circuit 24R1B and an output node of the photon detection circuit 24R2B. Two input nodes of the NOR circuit constituting the signal integration circuit 394 are connected to an output node of the photon detection circuit 24R2A and an output node of the photon detection circuit 24R2B.

An output node of the NOR circuit constituting the signal integration circuit 391 is connected to an input node of the signal processing circuit 331. An output node of the NOR circuit constituting the signal integration circuit 392 is connected to an input node of the signal processing circuit 332. An output node of the NOR circuit constituting the signal integration circuit 393 is connected to an input node of the signal processing circuit 333. An output node of the NOR circuit constituting the signal integration circuit 394 is connected to an input node of the signal processing circuit 334. That is, the signal integration circuit 391 has a function of integrating the output of the photon detection circuit 24R1A and the output of the photon detection circuit 24R1B and outputting the integrated output to the signal processing circuit 331. The signal integration circuit 392 has a function of integrating the output of the photon detection circuit 24R1A and the output of the photon detection circuit 24R2A and outputting the integrated output to the signal processing circuit 332. The signal integration circuit 393 has a function of integrating the output of the photon detection circuit 24R1B and the output of the photon detection circuit 24R2B and outputting the integrated output to the signal processing circuit 333. The signal integration circuit 394 has a function of integrating the output of the photon detection circuit 24R2A and the output of the photon detection circuit 24R2B and outputting the integrated output to the signal processing circuit 334.

The stop signal generation circuits 371, 372, 373 and 374 have a function of outputting a control signal STOPB for disabling the APD when the count values of the counters of all the corresponding signal processing circuits 33 reach a predetermined threshold value. Each of the stop signal generation circuits 371, 372, 373 and 374 may be constituted by a two-input NAND circuit, for example. Two input nodes of the NAND circuit constituting the stop signal generation circuit 371 are connected to a threshold value reaching signal output node of a threshold value detection circuit included in the signal processing circuit 331 and a threshold value reaching signal output node of a threshold value detection circuit included in the signal processing circuit 332. Two input nodes of the NAND circuit constituting the stop signal generation circuit 372 are connected to a threshold value reaching signal output node of a threshold value detection circuit included in the signal processing circuit 331 and a threshold value reaching signal output node of a threshold value detection circuit included in the signal processing circuit 333. Two input nodes of the NAND circuit constituting the stop signal generation circuit 373 are connected to a threshold value reaching signal output node of a threshold value detection circuit included in the signal processing circuit 332 and a threshold value reaching signal output node of a threshold value detection circuit included in the signal processing circuit 334. Two input nodes of the NAND circuit constituting the stop signal generation circuit 374 are connected to a threshold value reaching signal output node of a threshold value detection circuit included in the signal processing circuit 333 and a threshold value reaching signal output node of a threshold value detection circuit included in the signal processing circuit 334.

In this case, the stop signal generation circuit 371 outputs a low-level control signal STOPB1 when both a control signal FLG_1A+1B output from the signal processing circuit 331 and a control signal FLG_1A+2A output from the signal processing circuit 332 are at high-level. The stop signal generation circuit 372 outputs a low-level control signal STOPB2 when both a control signal FLG_1A+1B output from the signal processing circuit 331 and a control signal FLG_1B+2B output from the signal processing circuit 333 are at high-level. The stop signal generation circuit 373 outputs a low-level control signal STOPB3 when both a control signal FLG_1A+2A output from the signal processing circuit 332 and a control signal FLG_2A+2B output from the signal processing circuit 334 are at high-level. The stop signal generation circuit 374 outputs a control signal STOPB4 at low-level when both a control signal FLG_1B+2B output from the signal processing circuit 333 and a control signal FLG_2A+2B output from the signal processing circuit 334 are at high-level.

Each of the APD enabling circuits 38R1A, 38R1B, 38R2A and 38R2B has a function of controlling enabling and disabling of the APD constituting the photoelectric conversion element of the corresponding photon detection circuit 24 according to the control signals PDEN and STOPB. The APD enabling circuits 38R1A, 38R1B, 38R2A and 38R2B may be constituted by, for example, a two-input NAND circuit. The control signal STOPB1 from the stop signal generation circuit 371 and the control signal PDEN from the vertical scanning circuit unit 40 are input to input nodes of the NAND circuit constituting the APD enabling circuit 38R1A. A signal output from the APD enabling circuit 38R1A to a control node of the photon detection circuit 24R1A is a control signal PDENB1. The control signal STOPB2 from the stop signal generation circuit 372 and the control signal PDEN from the vertical scanning circuit unit 40 are input to input nodes of the NAND circuit constituting the APD enabling circuit 38R1B. A signal output from the APD enabling circuit 38R1B to a control node of the photon detection circuit 24R1B is a control signal PDENB2. The control signal STOPB3 from the stop signal generation circuit 373 and the control signal PDEN from the vertical scanning circuit unit 40 are input to input nodes of the NAND circuit constituting the APD enabling circuit 38R2A. A signal output from the APD enabling circuit 38R2A to a control node of the photon detection circuit 24R2A is a control signal PDENB3. The control signal STOPB4 from the stop signal generation circuit 374 and the control signal PDEN from the vertical scanning circuit unit 40 are input to input nodes of the NAND circuit constituting the APD enabling circuit 38R2B. A signal output from the APD enabling circuit 38R2B to a control node of the photon detection circuit 24R2B is a control signal PDENB4. Upon receiving the high-level control signals PDENB1, PDENB2, PDENB3, or PDENB4, the corresponding photon detection circuit 24R1A, 24R1B, 24R2A or 24R2B stops the recharge operation of the photoelectric conversion element.

By constituting the pixel circuit as described above, a count value based on the signals of the photon detection circuits 24R1A and 24R1B, that is, the imaging signal of the pixel 12R1 may be obtained from the signal processing circuit 331. A count value based on the signals of the photon detection circuits 24R1A and 24R2A, that is, a signal obtained by adding the A-image signal of the pixel 12R1 and the A-image signal of the pixel 12R2 may be obtained from the signal processing circuit 332. A count value based on the signals of the photon detection circuits 24R1B and 24R2B, that is, a signal obtained by adding the B-image signal of the pixel 12R1 and the B-image signal of the pixel 12R2 may be obtained from the signal processing circuit 333. A count value based on the signals of the photon detection circuits 24R2A and 24R2B, that is, an imaging signal of the pixel 12R2 may be obtained from the signal processing circuit 334.

That is, in the photoelectric conversion device according to the present embodiment, it is possible to acquire the imaging signal from each pixel 12, and it is possible to acquire a signal obtained by adding signals in units of a plurality of pixels for each color as each of the A-image signal and the B-image signal for phase difference detection a signal. Thus, the number of elements of the circuit may be reduced, and the amount of data to be read out may also be reduced.

In addition, in the present embodiment, each of the photon detection circuits 24 is configured to stop the operation of the APD in response to the output of the threshold value reaching signals from all the signal processing circuits 33 of the output destinations of the photon detection pulse signals. For example, the stop signal generation circuit 371 controls the control signal STOPB1 to low-level in response to receiving a threshold value reaching signal from the two signal processing circuits 331 and 332 to which the photon detection pulse from the photon detection circuit 24R1A is input. The photon detection circuit 24R1A stops the operation of the APD in response to the control signal PDENB1 that transitions to high-level in response to the control signal STOPB1 of low-level. Therefore, even when the photoelectric conversion unit 20 of the pixel 12 is divided for phase difference detection, the operation is not stopped until the count values of all the counters connected to the APD reach the threshold value, so that the count loss may be prevented.

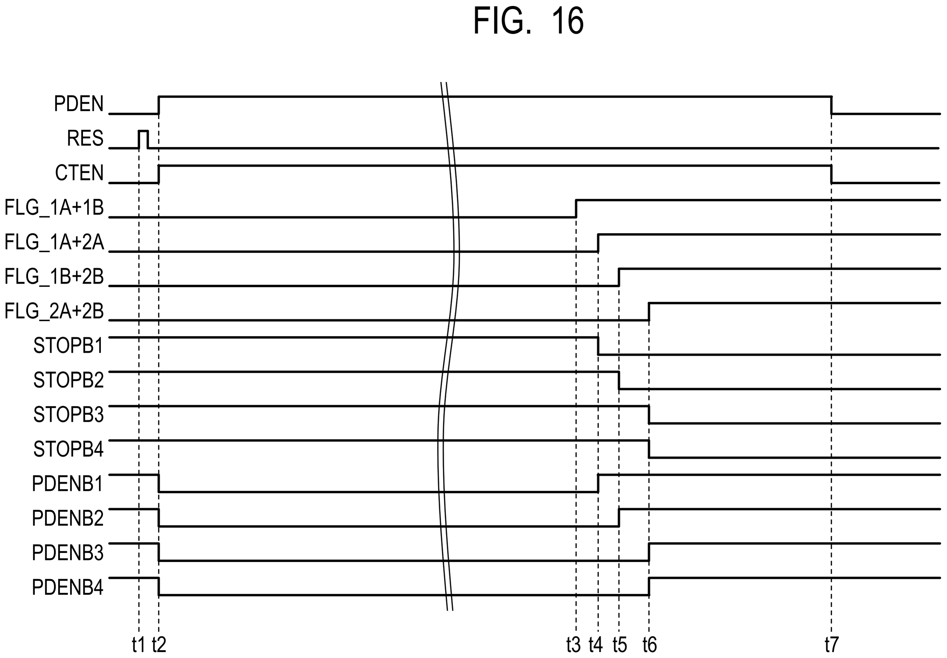

Next, a driving example of the photoelectric conversion device according to the present embodiment will be described with reference to Fig. 16. Fig. 16 is a timing chart illustrating a driving example of the photoelectric conversion device according to the present embodiment.

Fig. 16 illustrates waveforms of the control signals PDEN, RES, CTEN, FLG_1A+1B, FLG_1A+2A, FLG_1B+2B and FLG_2A+2B. Fig. 16 further illustrates waveforms of the control signals STOPB1, STOPB2, STOPB3, STOPB4, PDENB1, PDENB2, PDENB3 and PDENB4.

In Fig. 16, the operations of counting up the counters of the signal processing circuits 331, 332, 333 and 334 in response to the photon detection are omitted. The following description focuses on how the APDs and the counters are controlled according to the threshold value reaching signal of each counter.

At time t1, the vertical scanning circuit unit 40 controls the control signal RES to high-level. Thus, the count values of the counters of the signal processing circuits 331, 332, 333 and 334 are reset to 0. The control signals FLG_1A+1B, FLG_1A+2A, FLG_1B+2B, and FLG_2A+2B output from the threshold value detection circuits of the signal processing circuits 331, 332, 333 and 334 become low-level upon receiving the count value 0. As a result, the control signals STOPB1, STOPB2, STOPB3, and STOPB4 output from the stop signal generation circuits 371, 372, 373 and 374 become high-level.

At the subsequent time t2, the vertical scanning circuit unit 40 controls the control signal PDEN to high-level and starts the exposure period. As a result, the control signals PDENB1, PDENB2, PDENB3, and PDENB4 output from the APD enabling circuits 38R1A, 38R1B, 38R2A and 38R2B become low-level, and the p-channel MOS transistors constituting the quenching circuits are turned on. Accordingly, the photoelectric conversion elements of the photon detection circuits 24R1A, 24R1B, 24R2A and 24R2B are recharged to a state in which avalanche multiplication in the Geiger mode is possible.

At the time t2, the vertical scanning circuit unit 40 also controls the control signal CTEN to high-level. Thus, the counters of the signal processing circuits 331, 332, 333 and 334 are enabled, and the photon detection pulse signals output from the photon detection circuits 24R1A, 24R1B, 24R2A and 24R2B in response to photon incidence may be counted by the counters.

It is assumed that the count operations of the counters of the signal processing circuits 331, 332, 333 and 334 sequentially proceed along with the incidence of photons in this state, and the count value of the counter of the signal processing circuit 331 reaches a predetermined threshold value at time t3. Accordingly, the signal processing circuit 331 controls the control signal FLG_1A+1B from low-level to high-level.

It is assumed that the count value of the counter of the signal processing circuit 332 reaches a predetermined threshold value at the subsequent time t4. Accordingly, the signal processing circuit 332 controls the control signal FLG_1A+2A to high-level.

When the count values of the counters of all the signal processing circuits 331 and 332 connected to the photon detection circuit 24R1A reach the threshold value, the control signal STOPB1 output from the stop signal generation circuit 371 transitions from high-level to low-level. Accordingly, the control signal PDENB1 output from the APD enabling circuit 38R1A becomes high-level, and the operation of the photon detection circuit 24R1A is stopped.

It is assumed that the count value of the counter of the signal processing circuit 333 reaches a predetermined threshold value at the subsequent time t5. Accordingly, the signal processing circuit 333 controls the control signal FLG_1B+2B to high-level.

When the count values of the counters of all the signal processing circuits 331 and 333 connected to the photon detection circuit 24R1B reach the threshold value, the control signal STOPB2 output from the stop signal generation circuit 372 transitions from high-level to low-level. Accordingly, the control signal PDENB2 output from the APD enabling circuit 38R1B becomes high-level, and the operation of the photon detection circuit 24R1B is stopped.

It is assumed that the count value of the counter of the signal processing circuit 334 reaches a predetermined threshold value at the subsequent time t6. Accordingly, the signal processing circuit 334 controls the control signal FLG_2A+2B to high-level.

When the count values of the counters of all the signal processing circuits 332 and 334 connected to the photon detection circuit 24R2A reach the threshold value, the control signal STOPB3 output from the stop signal generation circuit 373 transitions from high-level to low-level. As a result, the control signal PDENB3 output from the APD enabling circuit 38R2A becomes high-level, and the operation of the photon detection circuit 24R2A is stopped.

Further, when the count values of the counters of all the signal processing circuits 333 and 334 connected to the photon detection circuit 24R2B reach the threshold value, the control signal STOPB4 output from the stop signal generation circuit 374 transitions from high-level to low-level. Accordingly, the control signal PDENB4 output from the APD enabling circuit 38R2B becomes high-level, and the operation of the photon detection circuit 24R2B is stopped.

At the subsequent time t7, the vertical scanning circuit unit 40 controls the control signals PDEN and CTEN to low-level. This completes the exposure period.

After the time t7, the count values held by the counters of the signal processing circuits 331, 332, 333 and 334 are read out to the readout circuit unit 50 via the output lines 16.

As described above, according to the present embodiment, even when the photoelectric conversion unit 20 of the pixel 12 is divided for phase difference detection, the operation is not stopped until the count values of all the counters connected to the APD reach the threshold value, so that the count loss may be prevented.

Although the readout of the signal from the pixel 12R has been described in the present embodiment, the readout of the signals from the pixels 12Gr, Gb, and B is the same. In addition, the method described in the second embodiment may be further applied to the signal readout from the pixels 12 having sensitivity to different colors.

### Fourth Embodiment

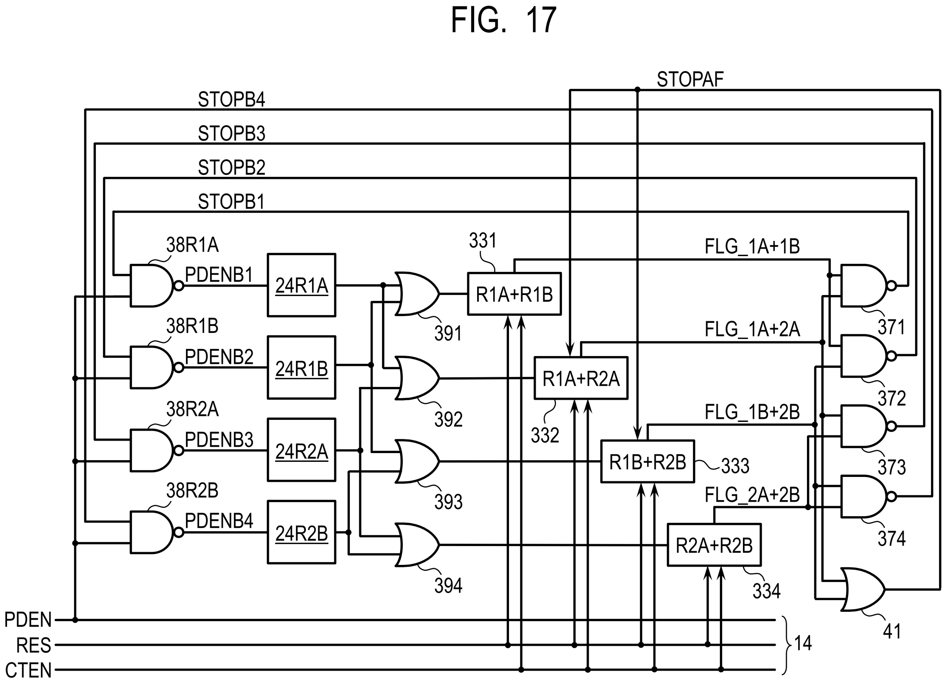

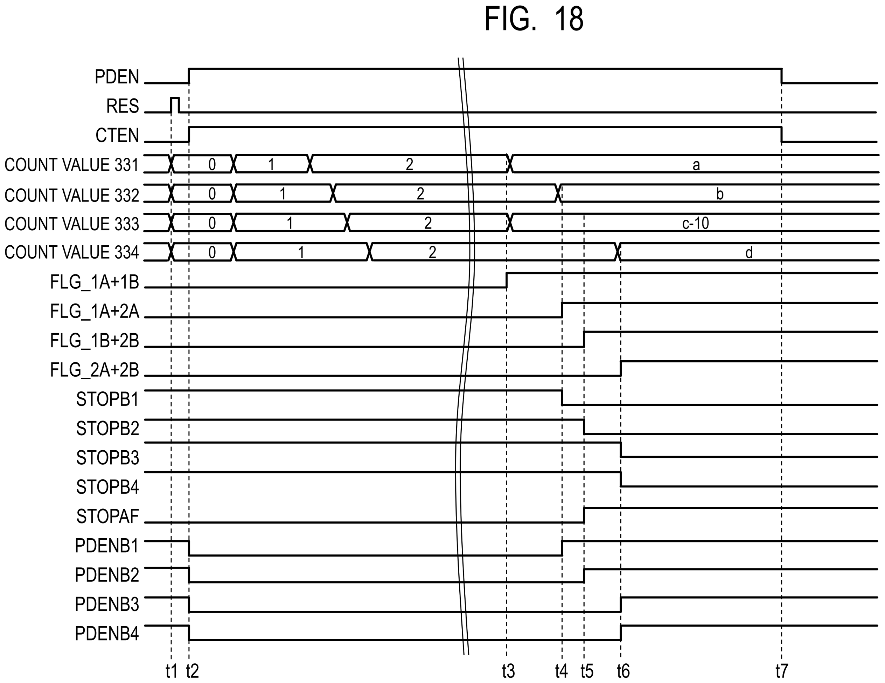

A photoelectric conversion device and a method of driving the same according to a fourth embodiment will be described with reference to Fig. 17 and Fig. 18. The same components as those of the photoelectric conversion devices according to the first to third embodiments are denoted by the same reference numerals, and description thereof will be omitted or simplified.

The photoelectric conversion device according to the present embodiment is the same as the photoelectric conversion device according to the first to third embodiments except that the configuration of the pixel 12 is different. In the present embodiment, differences from the photoelectric conversion devices according to the first to third embodiments will be mainly described, and description of points similar to those of the photoelectric conversion devices according to the first to third embodiments will be appropriately omitted.

Fig. 17 is a block diagram illustrating a configuration example of the pixel 12 in the photoelectric conversion device according to the present embodiment. In the photoelectric conversion device according to the present embodiment, as in the third embodiment, a pixel circuit is constituted by a pixel block including only pixels of the same color as a basic unit. Fig. 17 illustrates a pixel circuit of a pixel block including the pixel 12R1 and the pixel 12R2 among the pixel blocks constituted as described above. The photoelectric conversion device according to the present embodiment is different from the photoelectric conversion device according to the third embodiment in that each pixel block further includes an AF count stop circuit 41.

The AF count stop circuit 41 may be constituted by a two-input OR circuit as illustrated in Fig. 17, for example. Two input nodes of the OR circuit constituting the AF count stop circuit 41 are connected to the threshold value reaching signal output node of the threshold value detecting circuit included in the signal processing circuit 332 and the threshold value reaching signal output node of the threshold value detecting circuit included in the signal processing circuit 333. An output node of the OR circuit constituting the AF count stop circuit 41 is connected to the signal processing circuit 332 and the signal processing circuit 333.

The AF count stop circuit 41 outputs a high-level control signal STOPAF when the count value of either the signal processing circuit 332 that counts the A-image signal or the signal processing circuit 333 that counts the B-image signal reaches a predetermined threshold value. The signal processing circuits 332 and 333 stop the count operation of the counter when receiving the high-level control signal STOPAF from the AF count stop circuit 41. Then, the signal processing circuits 332 and 333 control the control signals FLG_1A+2A and FLG_1B+2B output from the threshold value detection circuit to high-level regardless of whether or not the count value of the counter has reached the threshold value in response to the high-level control signal STOPAF.

Next, a driving example of the photoelectric conversion device according to the present embodiment will be described with reference to Fig. 18. Fig. 18 is a timing chart illustrating a driving example of the photoelectric conversion device according to the present embodiment.

Fig. 18 illustrates waveforms of the control signals PDEN, RES, CTEN, FLG_1A+1B, FLG_1A+2A, FLG_1B+2B and FLG_2A+2B and count values of the counters. Fig. 18 further illustrates waveforms of the control signals STOPB1, STOPB2, STOPB3, STOPB4, STOPAF, PDENB1, PDENB2, PDENB3 and PDENB4. In Fig. 18, "count value 331" indicates the count value of the counter of the signal processing circuit 331, and "count value 332" indicates the count value of the counter of the signal processing circuit 332. Further, "count value 333" indicates the count value of the counter of the signal processing circuit 333, and "count value 334" indicates the count value of the counter of the signal processing circuit 334.

At time t1, the vertical scanning circuit unit 40 controls the control signal RES to high-level. Thus, the count values of the counters of the signal processing circuits 331, 332, 333 and 334 are reset to 0. The control signals FLG_1A+1B, FLG_1A+2A, FLG_1B+2B, and FLG_2A+2B output from the threshold value detection circuits of the signal processing circuits 331, 332, 333 and 334 become low-level upon receiving the count value 0. As a result, the control signals STOPB1, STOPB2, STOPB3, and STOPB4 output from the stop signal generation circuits 371, 372, 373 and 374 become high-level, and the control signal STOPAF output from the AF count stop circuit 41 becomes low-level.

At the subsequent time t2, the vertical scanning circuit unit 40 controls the control signal PDEN to high-level and starts the exposure period. As a result, the control signals PDENB1, PDENB2, PDENB3, and PDENB4 output from the APD enabling circuits 38R1A, 38R1B, 38R2A and 38R2B become low-level, and the p-channel MOS transistors constituting the quenching circuits are turned on. Accordingly, the photoelectric conversion elements of the photon detection circuits 24R1A, 24R1B, 24R2A and 24R2B are recharged to a state in which avalanche multiplication in the Geiger mode is possible.

At the time t2, the vertical scanning circuit unit 40 also controls the control signal CTEN to high-level. Thus, the counters of the signal processing circuits 331, 332, 333 and 334 are enabled, and the photon detection pulse signals output from the photon detection circuits 24R1A, 24R1B, 24R2A and 24R2B in response to photon incidence may be counted by the counters.

It is assumed that the count operations of the counters of the signal processing circuits 331, 332, 333 and 334 sequentially proceed along with the incidence of photons in this state, and the count value of the counter of the signal processing circuit 331 reaches a predetermined threshold value a at time t3. Accordingly, the signal processing circuit 331 stops the count operation and controls the control signal FLG_1A+1B from low-level to high-level. Here, it is assumed that the threshold values set in the counters of the signal processing circuits 331, 332, 333 and 334 are a, b, c and d, respectively (a, b, c and d are arbitrary integers). The threshold values a, b, c and d may be the same value or different values. The counter of the signal processing circuit 331 holds the count value a after the time t3 when the count value reaches the threshold value a.

It is assumed that the count value of the counter of the signal processing circuit 332 reaches the threshold value b at the subsequent time t4. Accordingly, the signal processing circuit 332 stops the count operation and controls the control signal FLG_1A+2A from low-level to high-level. The counter of the signal processing circuit 332 holds the count value b after the time t4 when the count value reaches the threshold value b. When the control signal FLG_1A+2A becomes high-level, the control signal STOPB1 becomes low-level, and the control signal PDENB1 output from the APD enabling circuit 38R1A becomes high-level. As a result, the operation of the photon detection circuit 24R1A is stopped.

When the control signal FLG_1A+2A transitions to high-level, the control signal STOPAF, which is an output signal of the AF count stop circuit 41, transitions from low-level to high-level at the subsequent time t5.

Upon receiving the high-level control signal STOPAF, the signal processing circuit 333 stops the count operation of the counter and controls the control signal FLG2A+2B from low-level to high-level. At the time t5, although the count value of the counter of the signal processing circuit 333 is c-10 for example and does not reach the threshold value c, the control signal STOPAF is given priority, and the count operation of the counter is stopped. The counter of the signal processing circuit 332 holds the count value (c-10) after the time t5.

When the control signal FLG_1B+2B transitions to high-level, the control signal STOPB2 becomes low-level, and the control signal PDENB2 output from the APD enabling circuit 38R1B becomes high-level. As a result, the operation of the photon detection circuit 24R1B is stopped.

It is assumed that the count value of the counter of the signal processing circuit 334 reaches the threshold value d at the subsequent time t6. Accordingly, the signal processing circuit 334 stops the count operation and controls the control signal FLG_2A+2B from low-level to high-level. The counter of the signal processing circuit 334 holds the count value d after the time t6 when the count value reaches the threshold value d. When the control signal FLG_2A+2B becomes high-level, the control signals STOPB3 and STOPB4 become low-level, and the control signals PDENB3 and PDENB4 output from the APD enabling circuits 38R2A and 38R2B become high-level. As a result, the operations of the photon detection circuits 24R2A and 24R2B are stopped.

At the subsequent time t7, the vertical scanning circuit unit 40 controls the control signals PDEN and CTEN to low-level. This completes the exposure period.

After the time t7, the count value held by the counters of the signal processing circuits 331, 332, 333 and 334 are read out to the readout circuit unit 50 via the output lines 16.

As described above, in the present embodiment, the signal processing circuit 332 that counts the A-image signal and the signal processing circuit 333 that counts the B-image signal stop the count operation of the other counter when the count value of one counter reaches the threshold value. Therefore, according to the present embodiment, the count operation may be stopped while maintaining the ratio of the count values of the A-image signal and the B-image signal, and the accuracy of phase difference detection may be improved.

### Fifth Embodiment

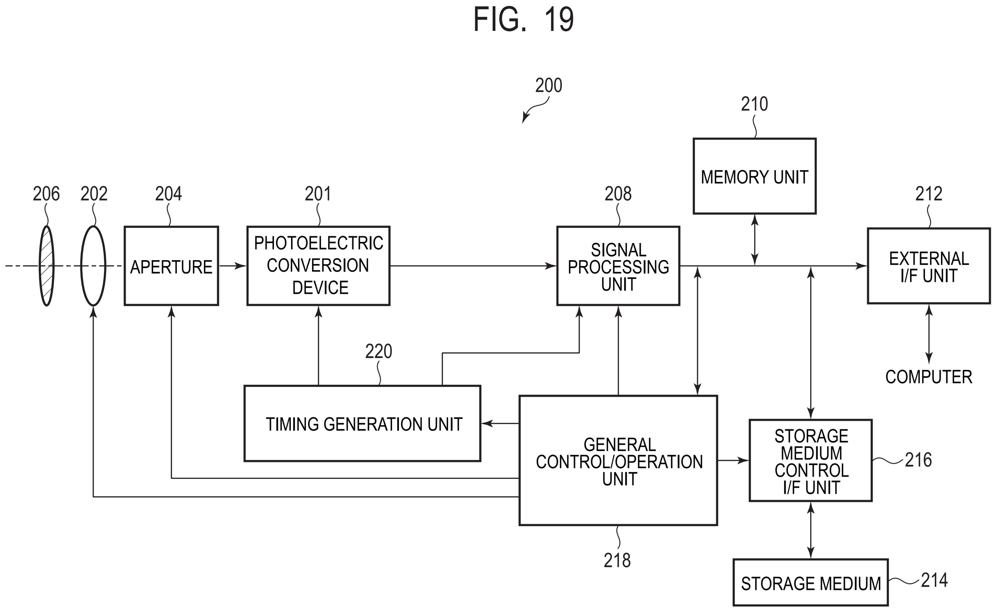

A photodetection system according to a fifth embodiment will be described with reference to Fig. 19. Fig. 19 is a block diagram illustrating a schematic configuration of a photodetection system according to the present embodiment. In the present embodiment, a photodetection sensor to which the photoelectric conversion device 100 according to any one of the first to fourth embodiments is applied will be described.

The photoelectric conversion device 100 described in the first to fourth embodiments may be applied to various photodetection systems. Examples of applicable photodetection systems include imaging systems such as digital still cameras, digital camcorders, surveillance cameras, copying machines, facsimiles, mobile phones, on-vehicle cameras, observation satellites, and the like. A camera module including an optical system such as a lens and an imaging device is also included in the photodetection system. Fig. 19 exemplifies a block diagram of a digital still camera as one of these.

The photodetection system 200 illustrated in Fig. 19 includes a photoelectric conversion device 201, a lens 202 that forms an optical image of an object on the photoelectric conversion device 201, an aperture 204 for varying the amount of light passing through the lens 202, and a barrier 206 for protecting the lens 202. The lens 202 and the aperture 204 constitute an optical system that focuses light onto the photoelectric conversion device 201. The photoelectric conversion device 201 is the photoelectric conversion device 100 described in any one of the first to fourth embodiments and converts the optical image formed by the lens 202 into image data.

The photodetection system 200 further includes a signal processing unit 208 that processes an output signal output from the photoelectric conversion device 201. The signal processing unit 208 generates image data from the digital signal output from the photoelectric conversion device 201. Further, the signal processing unit 208 performs various corrections and compressions as necessary and outputs the processed image data. The photoelectric conversion device 201 may include an AD conversion unit that generates a digital signal to be processed by the signal processing unit 208. The AD conversion unit may be formed on a semiconductor layer (semiconductor substrate) on which the photoelectric conversion elements of the photoelectric conversion device 201 are formed or may be formed on a semiconductor layer different from the semiconductor layer on which the photoelectric conversion elements of the photoelectric conversion device 201 are formed. The signal processing unit 208 may be formed on the same semiconductor layer as the photoelectric conversion device 201.

The photodetection system 200 further includes a buffer memory unit 210 for temporarily storing image data, and an external interface unit (external I/F unit) 212 for communicating with an external computer or the like. Further, the photodetection system 200 may include a storage medium 214 such as a semiconductor memory for performing storing or reading out of imaging data, and a storage medium control interface unit (storage medium control I/F unit) 216 for performing storing on or reading out from the storage medium 214. The storage medium 214 may be built in the photodetection system 200 or may be detachable. Communication between the storage medium control I/F unit 216 and the storage medium 214 and communication from the external I/F unit 212 may be performed wirelessly.

The photodetection system 200 further includes a general control/operation unit 218 that performs various calculations and controls the entire digital still camera, and a timing generation unit 220 that outputs various timing signals to the photoelectric conversion device 201 and the signal processing unit 208. Here, the timing signal or the like may be input from the outside, and the photodetection system 200 may include at least the photoelectric conversion device 201 and the signal processing unit 208 that processes the output signal output from the photoelectric conversion device 201. The timing generation unit 220 may be mounted on the photoelectric conversion device 201. Further, the general control/operation unit 218 and the timing generation unit 220 may be configured to perform a part or all of the control functions of the photoelectric conversion device 201.

The photoelectric conversion device 201 outputs an imaging signal to the signal processing unit 208. The signal processing unit 208 performs predetermined signal processing on the imaging signal output from the photoelectric conversion device 201, and outputs image data. The signal processing unit 208 generates an image using the imaging signal. The signal processing unit 208 may be configured to perform distance measurement calculation on the signal output from the photoelectric conversion device 201.

As described above, according to the present embodiment, by constituting the photodetection system using the photoelectric conversion devices according to any one of the first to fourth embodiments, it is possible to realize a photodetection system capable of acquiring a higher quality image.

### Sixth Embodiment

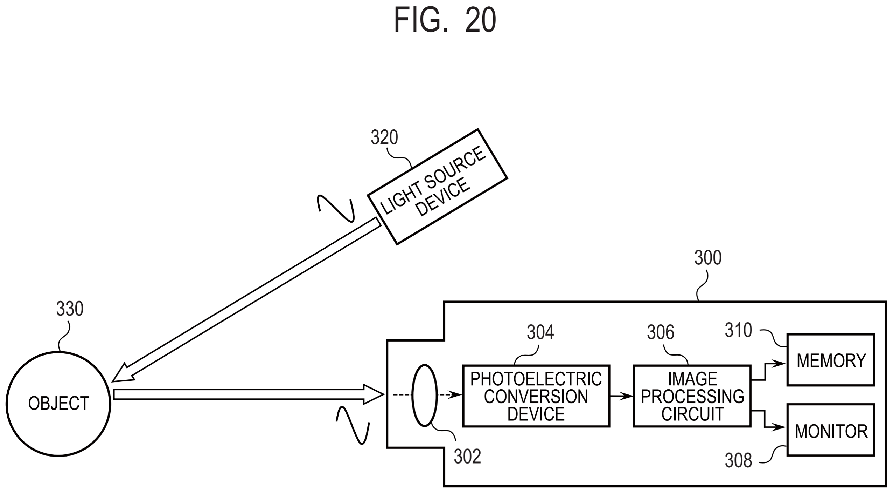

A range image sensor according to a sixth embodiment will be described with reference to Fig. 20. Fig. 20 is a block diagram illustrating a schematic configuration of a range image sensor according to the present embodiment. In the present embodiment, a range image sensor will be described as an example of a photodetection system to which the photoelectric conversion device 100 according to any one of the first to fourth embodiments is applied.

As illustrated in Fig. 20, the range image sensor 300 according to the present embodiment may include an optical system 302, a photoelectric conversion device 304, an image processing circuit 306, a monitor 308, and a memory 310. The range image sensor 300 receives light (modulated light or pulsed light) emitted from the light source device 320 toward an object 330 and reflected on the surface of the object 330 and acquires a distance image corresponding to the distance to the object 330.

The optical system 302 includes one or a plurality of lenses and has a function of forming an image of image light (incident light) from the object 330 on a light receiving surface (sensor unit) of the photoelectric conversion device 304.

The photoelectric conversion device 304 is the photoelectric conversion device 100 described in any one of the first to fourth embodiments and has a function of generating a distance signal indicating a distance to the object 330 based on image light from the object 330 and supplying the generated distance signal to the image processing circuit 306.

The image processing circuit 306 has a function of performing image processing for constructing a distance image based on the distance signal supplied from the photoelectric conversion device 304.

The monitor 308 has a function of displaying a distance image (image data) obtained by image processing in the image processing circuit 306. The memory 310 has a function of storing (recording) a distance image (image data) obtained by image processing in the image processing circuit 306.

As described above, according to the present embodiment, by constituting the range image sensor using the photoelectric conversion devices according to any one of the first to fourth embodiments, it is possible to realize a range image sensor capable of acquiring a range image including more accurate range information in conjunction with improvement in characteristics of the pixels 12.

### Seventh Embodiment

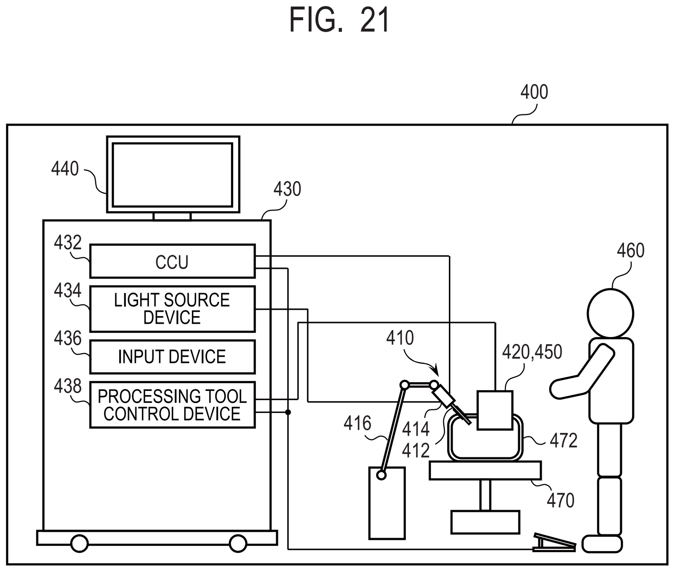

An endoscopic surgical system according to a seventh embodiment will be described with reference to Fig. 21. Fig. 21 is a schematic diagram illustrating a configuration example of an endoscopic surgical system according to the present embodiment. In the present embodiment, an endoscopic surgical system will be described as an example of a photodetection system to which the photoelectric conversion device 100 according to any one of the first to fourth embodiments is applied.

Fig. 21 illustrates a state in which an operator (surgeon) 460 performs surgery on a patient 472 on a patient bed 470 using an endoscopic surgical system 400.

As illustrated in Fig. 21, the endoscopic surgical system 400 according to the present embodiment may include an endoscope 410, a surgical tool 420, and a cart 430 on which various devices for endoscopic surgery are mounted. A camera control unit (CCU) 432, a light source device 434, an input device 436, a processing tool control device 438, a display device 440, and the like may be mounted on the cart 430.

The endoscope 410 includes a lens barrel 412 in which an area of a predetermined length from the tip is inserted into a body cavity of the patient 472, and a camera head 414 connected to the base end of the lens barrel 412. Although Fig. 21 illustrates an endoscope 410 configured as a so-called rigid mirror having a rigid lens barrel 412, the endoscope 410 may be configured as a so-called flexible mirror having a flexible lens barrel. The endoscope 410 is held in a movable state by an arm 416.

The tip of the lens barrel 412 is provided with an opening into which an objective lens is fitted. A light source device 434 is connected to the endoscope 410, and light generated by the light source device 434 is guided to the tip of the lens barrel 412 by a light guide extended inside the lens barrel and is irradiated toward an observation target in the body cavity of the patient 472 through the objective lens. Note that the endoscope 410 may be a direct-viewing mirror, an oblique-viewing mirror, or a side-viewing mirror.

An optical system and a photoelectric conversion device (not illustrated) are provided inside the camera head 414, and reflected light (observation light) from the observation target is focused on the photoelectric conversion device by the optical system. The photoelectric conversion device photoelectrically converts the observation light and generates an electrical signal corresponding to the observation light, that is, an image signal corresponding to the observation image. As the photoelectric conversion device, the photoelectric conversion device 100 described in any one of the first to fourth embodiments may be used. The image signal is transmitted to the CCU 432 as RAW data.

The CCU 432 may be configured by a central processing unit (CPU), a graphics processing unit (GPU), or the like and integrally controls operations of the endoscope 410 and the display device 440. Further, the CCU 432 receives an image signal from the camera head 414 and performs various types of image processing for displaying an image based on the image signal, such as development processing (demosaic processing), on the image signal.

The display device 440 displays an image based on the image signal subjected to the image processing by the CCU 432 under the control of the CCU 432.

The light source device 434 may be configured by, for example, a light source such as a light emitting diode (LED) and supplies irradiation light to the endoscope 410 when photographing a surgical part or the like.

The input device 436 is an input interface to the endoscopic surgical system 400. The user may input various kinds of information and input instructions to the endoscopic surgical system 400 via the input device 436.

The processing tool control device 438 controls the driving of the energy processing tool 450 for tissue ablation, incision, blood vessel sealing, or the like.

The light source device 434 that supplies irradiation light to the endoscope 410 when imaging the surgical part may be configured by, for example, a white light source configured by an LED, a laser light source, or a combination thereof. When the white light source is configured by a combination of RGB laser light sources, since the output intensity and the output timing of each color (each wavelength) may be controlled with high accuracy, the white balance of the captured image may be adjusted in the light source device 434. In addition, in this case, it is also possible to capture an image corresponding to each of RGB in a time division manner by irradiating the observation target with laser light from each of the RGB laser light sources in a time division manner and controlling driving of the imaging element of the camera head 414 in synchronization with the irradiation timing. According to this method, a color image may be obtained without providing a color filter in the image sensor.

Further, the driving of the light source device 434 may be controlled so as to change the intensity of light to be output every predetermined time. By controlling the driving of the image sensor of the camera head 414 in synchronization with the timing of the change of the intensity of the light to acquire an image in a time-division manner and compositing the image, it is possible to generate an image having a high dynamic range free from so-called blacked up shadows and blown out highlights.

The light source device 434 may be configured to be capable of supplying light in a predetermined wavelength band corresponding to special light observation. In the special light observation, for example, wavelength dependency of absorption of light in body tissue is utilized. Specifically, a predetermined tissue such as a blood vessel in the superficial layer of a mucous membrane is photographed with high contrast by irradiating light in a narrow band as compared with irradiation light (that is, white light) at the time of normal observation. Alternatively, in the special light observation, fluorescence observation in which an image is obtained by fluorescence generated by irradiation with excitation light may be performed. In the fluorescence observation, a body tissue is irradiated with excitation light to observe fluorescence from the body tissue, or a body tissue is locally injected with a reagent such as indocyanine green (ICG), and the body tissue is irradiated with excitation light corresponding to a fluorescence wavelength of the reagent to obtain a fluorescence image. The light source device 434 may be configured to be capable of supplying narrowband light and/or excitation light corresponding to such special light observation.

As described above, according to the present embodiment, by constituting the endoscopic surgical system using the photoelectric conversion device according to any one of the first to fourth embodiments, it is possible to realize an endoscopic surgical system capable of acquiring a better quality image.

### Eighth Embodiment

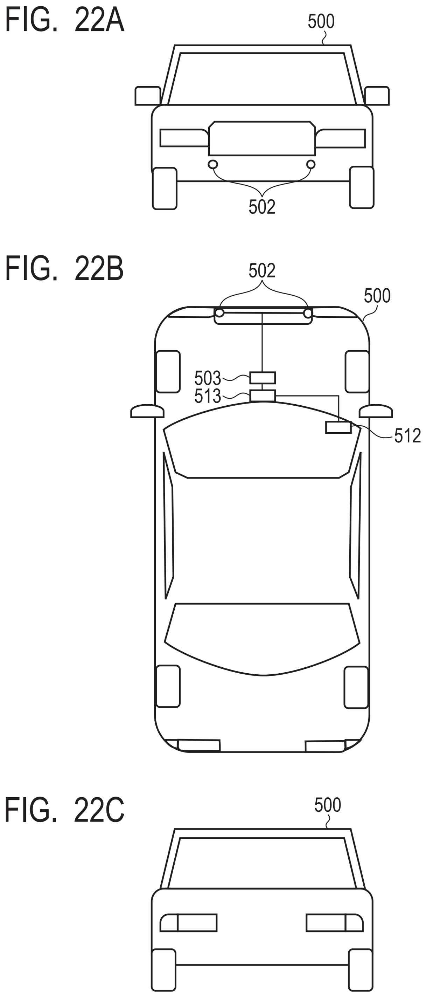

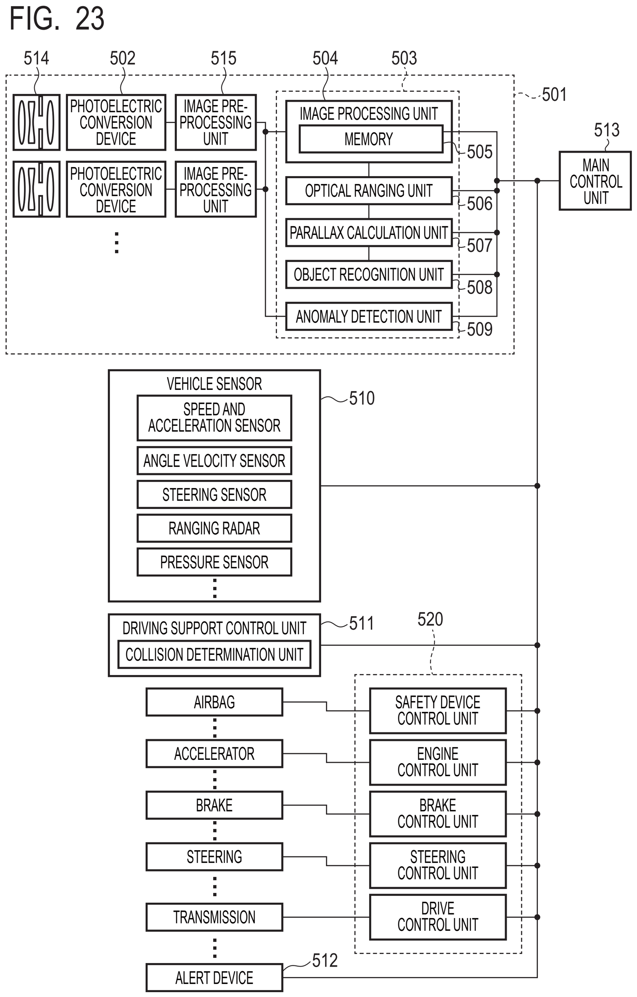

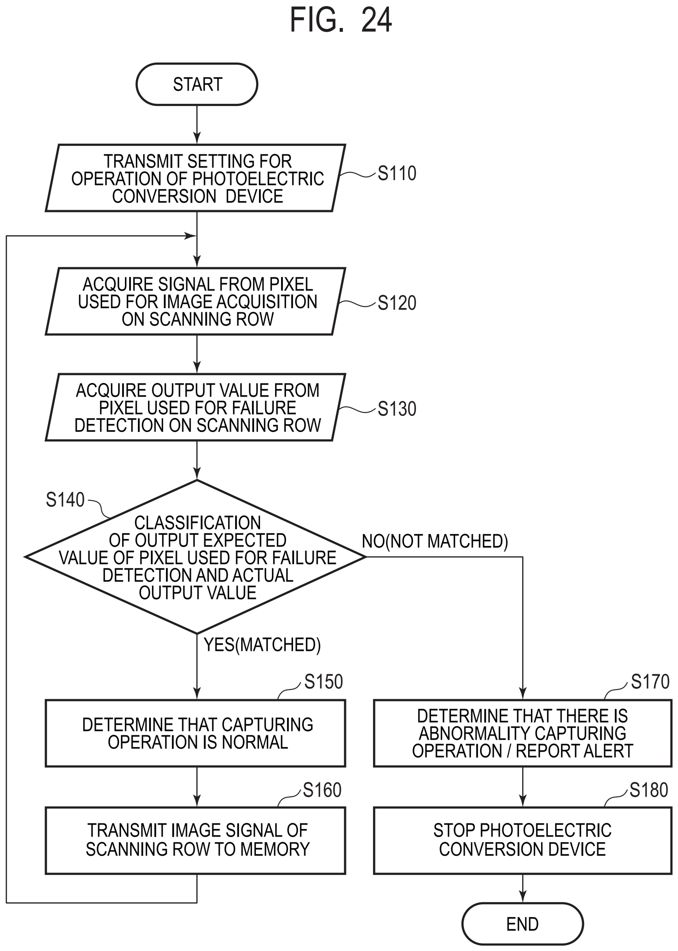

A photodetection system and a movable object according to an eighth embodiment will be described with reference to Fig. 22A to Fig. 24. Fig. 22A to Fig. 22C are schematic diagrams illustrating a configuration example of a movable object according to the present embodiment. Fig. 23 is a block diagram illustrating a schematic configuration of a photodetection system according to the present embodiment. Fig. 24 is a flowchart illustrating an operation of the photodetection system according to the present embodiment. In the present embodiment, an application example to an on-vehicle camera will be described as a photodetection system to which the photoelectric conversion device 100 according to any one of the first to fourth embodiments is applied.

Fig. 22A to Fig. 22C are schematic diagrams illustrating a configuration example of a movable object (vehicle system) according to the present embodiment. Fig. 22A to Fig. 22C illustrate a configuration of a vehicle 500 (automobile) as an example of a vehicle system incorporating a photodetection system to which the photoelectric conversion device according to any one of the first to fourth embodiments is applied. Fig. 22A is a schematic front view of the vehicle 500, Fig. 22B is a schematic plan view of the vehicle 500, and Fig. 22C is a schematic rear view of the vehicle 500. The vehicle 500 includes a pair of photoelectric conversion devices 502 on a front face thereof. Here, the photoelectric conversion device 502 is the photoelectric conversion device 100 described in any one of the first to fourth embodiments. The vehicle 500 includes an integrated circuit 503, an alert device 512, and a main control unit 513.

Fig. 23 is a block diagram illustrating a configuration example of the photodetection system 501 mounted on the vehicle 500. The photodetection system 501 includes photoelectric conversion devices 502, image preprocessing units 515, an integrated circuit 503, and optical systems 514. The photoelectric conversion device 502 is the photoelectric conversion device 100 described in any one of the first to fourth embodiments. The optical system 514 forms an optical image of an object on the photoelectric conversion device 502. The photoelectric conversion device 502 converts the optical image of the object formed by the optical system 514 into an electrical signal. The image preprocessing unit 515 performs predetermined signal processing on the signal output from the photoelectric conversion device 502. The function of the image preprocessing unit 515 may be incorporated in the photoelectric conversion device 502. At least two sets of the optical system 514, the photoelectric conversion device 502, and the image preprocessing unit 515 are provided in the photodetection system 501, and an output from the image preprocessing unit 515 of each set is input to the integrated circuit 503.

The integrated circuit 503 is an integrated circuit for an imaging system application, and includes an image processing unit 504, an optical ranging unit 506, a parallax calculation unit 507, an object recognition unit 508, and an abnormality detection unit 509. The image processing unit 504 processes the image signal output from the image preprocessing unit 515. For example, the image processing unit 504 performs image processing such as development processing and defect correction on the output signal of the image preprocessing unit 515. The image processing unit 504 includes a memory 505 that temporarily holds the image signal. In the memory 505, for example, the position of a known defective pixel in the photoelectric conversion device 502 may be stored.

The optical ranging unit 506 performs focusing and distance measurement of the object. The parallax calculation unit 507 calculates distance measurement information (distance information) from a plurality of image data (parallax images) acquired by the plurality of photoelectric conversion devices 502. Each of the photoelectric conversion devices 502 may have a configuration capable of acquiring various kinds of information such as distance information. The object recognition unit 508 recognizes an object such as a vehicle, a road, a sign, or a person. Upon detecting an abnormality in the photoelectric conversion device 502, the abnormality detection unit 509 notifies the main control unit 513 of the abnormality.

The integrated circuit 503 may be realized by dedicatedly designed hardware, may be realized by a software module, or may be realized by a combination thereof. Further, it may be realized by a field programmable gate array (FPGA), an application specific integrated circuit (ASIC), or the like, or may be realized by a combination of these.

The main control unit 513 integrally controls the operations of the photodetection system 501, the vehicle sensor 510, the control unit 520, and the like. The vehicle 500 may not include the main control unit 513. In this case, the photoelectric conversion device 502, the vehicle sensor 510, and the control unit 520 transmit and receive control signals via a communication network. For example, the controller area network (CAN) standard may be applied to the transmission and reception of the control signals.

The integrated circuit 503 has a function of receiving a control signal from the main control unit 513 or transmitting a control signal or a setting value to the photoelectric conversion device 502 by its own control unit.

The photodetection system 501 is connected to the vehicle sensor 510 and may detect a traveling state of the host vehicle such as a vehicle speed, a yaw rate, and a steering angle, an environment outside the host vehicle, and states of other vehicles and obstacles. The vehicle sensor 510 is also a distance information acquisition unit that acquires distance information to the object. In addition, the photodetection system 501 is connected to a driving support control unit 511 that performs various kinds of driving support such as automatic steering, automatic traveling, and a collision prevention function. In particular, with respect to the collision determination function, the driving support control unit 511 estimates the collision with other vehicles or obstacles and determines whether or not there is a collision with other vehicles or obstacles based on the detection results of the photodetection system 501 and the vehicle sensor 510. Thus, avoidance control when a collision is estimated and activation of the safety device at the time of the collision are performed.

The photodetection system 501 is also connected to an alert device 512 that issues an alert to the driver based on the determination result of the collision determination unit. For example, when the determination result of the collision determination unit is that the possibility of a collision is high, the main control unit 513 performs vehicle control for avoiding a collision and reducing damage by applying a brake, returning an accelerator, suppressing engine output, or the like. The alert device 512 alerts the user by sounding an alarm such as a sound, displaying alert information on a display screen of a car navigation system, a meter panel, or the like, or vibrating a seat belt or a steering wheel.

In the present embodiment, an image of the surroundings of the vehicle, for example, the front or the rear, is captured by the photodetection system 501. Fig. 22B illustrates an arrangement example of the photodetection system 501 in a case where the photodetection system 501 captures an image in front of the vehicle.

As described above, the photoelectric conversion devices 502 are arranged in front of the vehicle 500. Specifically, it is preferable that a center line with respect to an advancing/retreating direction or an outer shape (for example, a vehicle width) of the vehicle 500 is regarded as a symmetry axis, and two photoelectric conversion devices 502 are arranged line-symmetrically with respect to the symmetry axis in order to acquire distance information between the vehicle 500 and an object to be imaged and determine a possibility of collision. In addition, the photoelectric conversion devices 502 are preferably arranged so as not to interfere with the driver's visual field when the driver visually recognizes a situation outside the vehicle 500 from the driver's seat. The alert device 512 is preferably arranged so as to easily enter the field of view of the driver.

Next, a failure detection operation of the photoelectric conversion device 502 in the photodetection system 501 will be described with reference to Fig. 24. The failure detection operation of the photoelectric conversion device 502 may be performed in accordance with steps S110 to S180 illustrated in Fig. 24.

Step S110 is a step of performing setting at the time of start-up of the photoelectric conversion device 502. That is, the setting for the operation of the photoelectric conversion device 502 is transmitted from the outside of the photodetection system 501 (for example, the main control unit 513) or the inside of the photodetection system 501, and the imaging operation and the failure detection operation of the photoelectric conversion device 502 are started.

Next, in step S120, pixel signals are acquired from the effective pixels. In step S130, an output value from a failure detection pixel provided for failure detection is acquired. The failure detection pixel may include a photoelectric conversion element in the same manner as the effective pixel. A predetermined voltage is written to the photoelectric conversion element of the failure detection pixel. The failure detection pixel outputs a signal corresponding to the voltage written in the photoelectric conversion element. Note that step S120 and step S130 may be reversed.

Next, in step S140, a classification of the output expected value of the failure detection pixel and the actual output value from the failure detection pixel is performed. As a result of the classification in step S140, in a case where the output expected value matches the actual output value, the process proceeds to step S150, it is determined that the imaging operation is normally performed, and the process step proceeds to step S160. In step S160, the pixel signals of the scanning row are transmitted to the memory 505 and temporarily stored. After that, the process returns to step S120 to continue the failure detection operation. On the other hand, as a result of the classification in step S140, in a case where the output expected value does not coincide with the actual output value, the process proceeds to step S170. In step S170, it is determined that there is an abnormality in the imaging operation, and an alert is notified to the main control unit 513 or the alert device 512. The alert device 512 causes the display unit to display that an abnormality has been detected. Thereafter, in step S180, the photoelectric conversion device 502 is stopped, and the operation of the photodetection system 501 is ended.

In the present embodiment, an example in which the flowchart is looped for each row is described, but the flowchart may be looped for each plurality of rows, or the failure detection operation may be performed for each frame. The alert of step S170 may be notified to the outside of the vehicle via a wireless network.

In addition, in the present embodiment, the control in which the own vehicle does not collide with another vehicle has been described, but the present embodiment is also applicable to control in which the own vehicle follows another vehicle and performs automatic driving, control in which the vehicle performs automatic driving so as not to protrude from a lane, and the like. Further, the photodetection system 501 is not limited to a vehicle such as an own vehicle and may be applied to, for example, other movable object (mobile device) of a ship, an aircraft, an industrial robot, or the like. In addition, the present embodiment is not limited to the movable object and may be widely applied to equipment using object recognition, such as intelligent transport systems (ITS).

### Ninth Embodiment

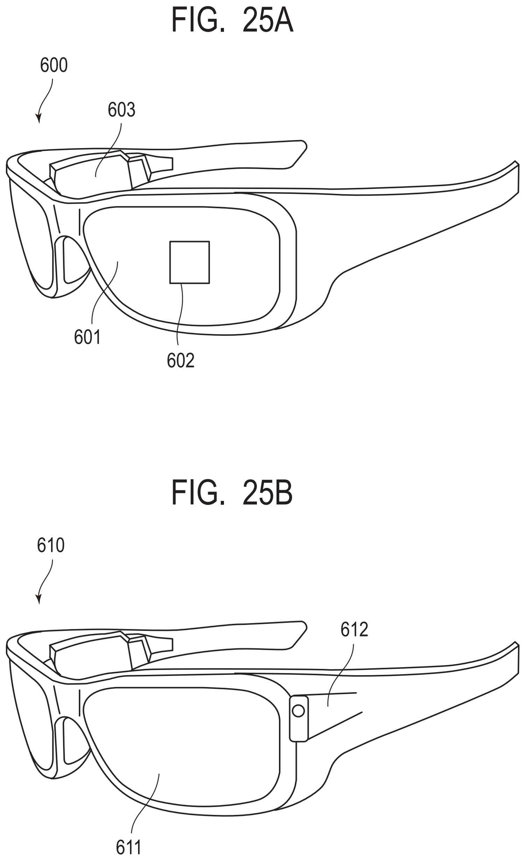

A photodetection system according to a ninth embodiment will be described with reference to Fig. 25A and Fig. 25B. Fig. 25A and Fig. 25B are schematic diagrams illustrating configuration examples of the photodetection system according to the present embodiment. In the present embodiment, an application example to eyeglasses (smart glasses) will be described as a photodetection system to which the photoelectric conversion device 100 of any one of the first to fourth embodiments is applied.

Fig. 25A illustrates eyeglasses 600 (smart glasses) according to one application example. The eyeglasses 600 include lenses 601, a photoelectric conversion device 602, and a control device 603.

The photoelectric conversion device 602 is the photoelectric conversion device 100 described in any one of the first to fourth embodiments and is provided on the lens 601. One photoelectric conversion device 602 may be provided, or a plurality of photoelectric conversion devices may be provided. When a plurality of photoelectric conversion devices 602 are used, a combination of a plurality of types of photoelectric conversion devices 602 may be used. The arrangement position of the photoelectric conversion device 602 is not limited to that in Fig. 25A. A display device (not illustrated) including a light emitting device such as an organic light emitting diode (OLED) or a light emitting diode (LED) may be provided on the back surface side of the lens 601.

The control device 603 functions as a power supply that supplies power to the photoelectric conversion device 602 and the display device. The control device 603 has a function of controlling the operations of the photoelectric conversion device 602 and the display device. The lens 601 may be provided with an optical system for focusing light on the photoelectric conversion device 602.

Fig. 25B illustrates eyeglasses 610 (smart glasses) according to another application example. The eyeglasses 610 include lenses 611 and a control device 612. A photoelectric conversion device (not illustrated) corresponding to the photoelectric conversion device 602 and the display device may be mounted on the control device 612.

The lens 611 is provided with a photoelectric conversion device in the control device 612 and an optical system for projecting light from the display device, and an image is projected thereon. The control device 612 functions as a power supply that supplies power to the photoelectric conversion device and the display device and has a function of controlling operations of the photoelectric conversion device and the display device.

The control device 612 may further include a line-of-sight detection unit that detects the line of sight of the wearer. In this case, an infrared light emitting unit may be provided in the control device 612, and infrared light emitted from the infrared light emitting unit may be used for detection of a line of sight. Specifically, the infrared light emitting unit emits infrared light to the eyeball of the user who is watching at the display image. A captured image of the eyeball is obtained by detecting reflected light of the emitted infrared light from the eyeball by an imaging unit having a light receiving element. By providing a reduction unit that reduces light from the infrared light emitting unit to the display unit in a plan view, it is possible to reduce degradation of image quality.

The line of sight of the user with respect to the display image may be detected from the captured image of the eyeball obtained by capturing the infrared light. Any known technique may be applied to the line-of-sight detection using the captured image of the eyeball. As an example, a line-of-sight detection method based on a Purkinje image due to reflection of irradiation light on the cornea may be used. More specifically, the line-of-sight detection process based on the pupil corneal reflection method is performed. The line of sight of the user may be detected by calculating a line-of-sight vector representing the orientation (rotation angle) of the eyeball based on the image of the pupil included in the captured image of the eyeball and the Purkinje image using the pupil corneal reflex method.

The display device according to the present embodiment may include a photoelectric conversion device having a light receiving element and may be configured to control a display image based on line-of-sight information of a user from the photoelectric conversion device. Specifically, the display device determines, based on the line-of-sight information, a first viewing area that the user gazes at and a second viewing area other than the first viewing area. The first viewing area and the second viewing area may be determined by a control device of the display device or may be determined by an external control device. In a case where the determination is made by the external control device, the determination result is transmitted to the display device via communication. In the display area of the display device, the display resolution of the first viewing area may be controlled to be higher than the display resolution of the second viewing area. That is, the resolution of the second viewing area may be lower than the resolution of the first viewing area.

The display area may include a first display area and a second display area different from the first display area, and an area having a high priority may be determined from the first display area and the second display area based on the line-of-sight information. The first display area and the second display area may be determined by a control device of the display device or may be determined by an external control device. In a case where the determination is made by the external control device, the determination result is transmitted to the display device via communication. The resolution of the high priority area may be controlled to be higher than the resolution of the area other than the high priority area. That is, the resolution of the area having a relatively low priority may be lowered.

Note that artificial intelligence (AI) may be used to determine the first viewing area or the area with a high priority. The Al may be a model configured to estimate an angle of the line of sight and a distance to a target object ahead of the line of sight from the image of the eyeball using the image of the eyeball and the direction in which the eyeball of the image is actually viewed as teacher data. The Al program may be included in the display device, the photoelectric conversion device, or the external device. In a case where the external device has a program, the information may be transmitted to the display device via communication.

In the case of performing display control based on visual recognition detection, the present disclosure may be preferably applied to smart glasses further including a photoelectric conversion device that captures an image of the outside. Smart glasses may display captured external information in real time.

### Tenth Embodiment

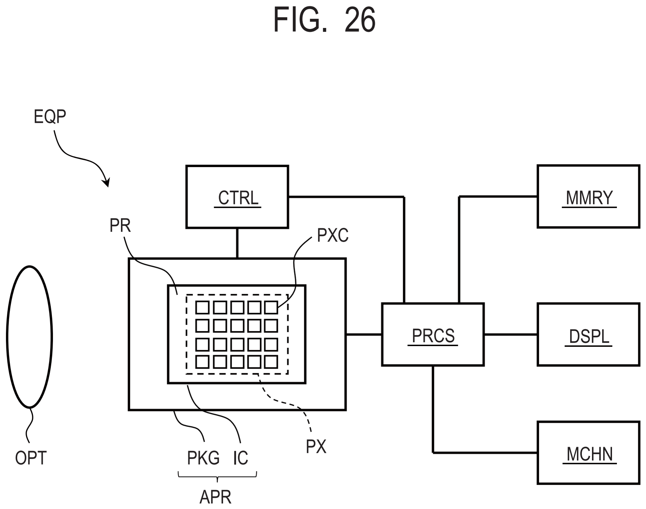

An equipment according to a tenth embodiment will be described with reference to Fig. 26. Fig. 26 is a block diagram illustrating a schematic configuration of an equipment according to the present embodiment.

Fig. 26 is a schematic diagram illustrating an equipment EQP including a photoelectric conversion device APR. The photoelectric conversion device APR has the function of the photoelectric conversion device 100 according to any one of the first to fourth embodiments. All or part of the photoelectric conversion device APR is a semiconductor device IC. The photoelectric conversion device APR of the present example may be used as, for example, an image sensor, an auto focus (AF) sensor, a photometric sensor, or a distance measurement sensor. The semiconductor device IC includes a pixel region PX in which pixel circuits PXC each including a photoelectric conversion unit are arranged in a matrix. The semiconductor device IC may include a peripheral region PR around the pixel region PX. A circuit other than the pixel circuit may be arranged in the peripheral region PR.

The photoelectric conversion device APR may have a structure (chip stacked structure) in which a first semiconductor chip provided with a plurality of photoelectric conversion units and a second semiconductor chip provided with peripheral circuits are stacked. Each of the peripheral circuits in the second semiconductor chip may be column circuits corresponding to pixel columns of the first semiconductor chip. The peripheral circuits in the second semiconductor chip may be matrix circuits corresponding to pixels or pixel blocks in the first semiconductor chip. As the connections between the first semiconductor chip and the second semiconductor chip, through electrodes (through silicon via (TSV)), inter-chip interconnections by direct bonding of a conductor such as copper, connections by micro bumps between chips, connections by wire bonding, or the like may be employed.

The photoelectric conversion device APR may include a package PKG that accommodates the semiconductor device IC in addition to the semiconductor device IC. The package PKG may include a base body to which the semiconductor device IC is fixed, a lid body such as glass facing the semiconductor device IC, and connection members such as bonding wires or bumps for connecting terminals provided on the base body and terminals provided on the semiconductor device IC.

The equipment EQP may further include at least one of an optical device OPT, a control device CTRL, a processing device PRCS, a display device DSPL, a storage device MMRY, and a mechanical device MCHN. The optical device OPT corresponds to the photoelectric conversion device APR, and is, for example, a lens, a shutter, or a mirror. The control device CTRL controls the photoelectric conversion device APR, and is, for example, a semiconductor device such as an ASIC. The processing device PRCS processes a signal output from the photoelectric conversion device APR and constitutes an analog front end (AFE) or a digital front end (DFE). The processing unit PRCS is a semiconductor device such as a central processing unit (CPU) or an ASIC. The display device DSPL may be an electroluminescent (EL) display device or a liquid crystal display device that displays information (image) obtained by the photoelectric conversion device APR. The storage device MMRY may be a magnetic device or a semiconductor device that stores information (image) obtained by the photoelectric conversion device APR. The storage device MMRY may be a volatile memory such as a static random access memory (SRAM) or a dynamic random access memory (DRAM), or a nonvolatile memory such as a flash memory or a hard disk drive. The mechanical device MCHN may include a movable portion or a propulsion portion such as a motor or an engine. In the equipment EQP, a signal output from the photoelectric conversion device APR is displayed on the display device DSPL or transmitted to the outside by a communication device (not illustrated) included in the equipment EQP. Therefore, it is preferable that the equipment EQP further includes a storage device MMRY and a processing device PRCS separately from the storage circuit unit and the arithmetic circuit unit included in the photoelectric conversion device APR.

The equipment EQP illustrated in Fig. 26 may be an electronic device such as an information terminal (for example, a smartphone or a wearable terminal) having a photographing function or a camera (for example, an interchangeable lens camera, a compact camera, a video camera, and a monitoring camera). The mechanical device MCHN in the camera may drive components of the optical device OPT for zooming, focusing, and shutter operation. The equipment EQP may be a transportation device (movable object) such as a vehicle, a ship, or an airplane. The equipment EQP may be a medical device such as an endoscope or a CT scanner.

The mechanical device MCHN in the transport device may be used as a mobile device. The equipment EQP as a transport device is suitable for transporting the photoelectric conversion device APR, or for assisting and/or automating operation (manipulation) by an imaging function. The processing device PRCS for assisting and/or automating driving (manipulation) may perform processing for operating the mechanical device MCHN as a mobile device based on information obtained by the photoelectric conversion device APR.

The photoelectric conversion device APR according to the present embodiment may provide a high value to a designer, a manufacturer, a seller, a purchaser, and/or a user thereof. Therefore, when the photoelectric conversion device APR is mounted on the equipment EQP, the value of the equipment EQP may also be increased. Therefore, in manufacturing and selling the equipment EQP, it is advantageous to determine the mounting of the photoelectric conversion device APR of the present embodiment on the equipment EQP in order to increase the value of the equipment EQP.

### Modified Embodiments

The present disclosure is not limited to the above-described embodiments, and various modifications are possible.

For example, an example in which a part of the configuration of any of the embodiments is added to another embodiment or an example in which a part of the configurations of any of the embodiments is substituted with some of the configurations of another embodiment is also an embodiment of the present disclosure.

Further, the circuit configuration of the pixel 12 is not limited to the above-described embodiments. For example, a switch such as a transistor may be provided between the photoelectric conversion element 22 and the quenching circuit 31 or between the photoelectric conversion element 22 and the signal processing unit 30 to control the electrical connection state therebetween. Further, a switch such as a transistor may be provided between the node to which the voltage VH is supplied and the quenching circuit 31 and/or between the node to which the voltage VL is supplied and the photoelectric conversion element 22 to control an electrical connection state therebetween.

Further, in the circuit configuration of the pixel 12 of the above-described embodiments, the signal charge (electrons) is taken out from the cathode side with the anode side of the APD as the fixed potential, but the signal charge (holes) may be taken out from the anode side with the cathode side of the APD as the fixed potential.

Further, although the color filters of the RGB array are described in the above-described embodiments, the color filters of the CMY array including a C pixel including a cyan color filter, an M pixel including a magenta color filter, and a Y pixel including a yellow color filter may be used. In addition to the color pixels of RGB, CMY, and the like, a pixel (white pixel) that directly detects incident light without color separation or an IR pixel including an infrared transmission filter having a transmission wavelength range in an infrared wavelength range may be further included. Each pixel 12 does not necessarily need to include a color filter.

According to the present disclosure, it is possible to realize higher functionality in a photoelectric conversion device having a plurality of counters in a pixel circuit.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A photoelectric conversion device (100) comprising:
a photon detection circuit (24) configured to output a pulse signal in response to incidence of a photon; and
a signal processing circuit (33A, 33B) connected to the photon detection circuit (24) and including a plurality of counters (34A, 34B) configured to count the pulse signal,
wherein the signal processing circuit (33A, 33B) is configured to output a threshold value reaching signal when a count value of each of the plurality of counters (34A. 34B) reaches a predetermined threshold value, and
wherein the photon detection circuit (24) is configured to stop outputting the pulse signal when receiving the threshold value reaching signal from each of the plurality of counters (34A, 34B).

2. The photoelectric conversion device according to claim 1,
wherein the plurality of counters includes a first counter and a second counter,
wherein the signal processing circuit is configured to output a first signal when a count value of the first counter reaches a first threshold value and output a second signal when a count value of the second counter reaches a second threshold value, and
wherein the photon detection circuit is configured to stop outputting the pulse signal when receiving the first signal and the second signal.

3. The photoelectric conversion device according to claim 2,
wherein the photon detection circuit includes a first photon detection circuit, a second photon detection circuit, and a third photon detection circuit,
wherein the first counter is configured to count the pulse signal output from the first photon detection circuit and the pulse signal output from the second photon detection circuit,
wherein the second counter is configured to count the pulse signal output from the first photon detection circuit and the pulse signal output from the third photon detection circuit, and
wherein the first photon detection circuit is configured to stop outputting the pulse signal when receiving the first signal and the second signal.

4. The photoelectric conversion device according to claim 3,
wherein the photon detection circuit further includes a fourth photon detection circuit,
wherein the signal processing circuit further includes a third counter configured to count the pulse signal output from the second photon detection circuit and the pulse signal output from the fourth photon detection circuit,
wherein the signal processing circuit is configured to output a third signal when a count value of the third counter reaches a third threshold value, and
wherein the second photon detection circuit is configured to stop outputting the pulse signal when receiving the first signal and the third signal.

5. The photoelectric conversion device according to claim 4,
wherein the signal processing circuit further includes a fourth counter configured to count the pulse signal output from the third photon detection circuit and the pulse signal output from the fourth photon detection circuit,
wherein the signal processing circuit is configured to output a fourth signal when a count value of the fourth counter reaches a fourth threshold value,
wherein the third photon detection circuit is configured to stop outputting the pulse signal when receiving the second signal and the fourth signal, and
wherein the fourth photon detection circuit is configured to stop outputting the pulse signal when receiving the third signal and the fourth signal.

6. The photoelectric conversion device according to claim 5,
wherein a first photoelectric conversion unit included in the first photon detection circuit and a second photoelectric conversion unit included in the second photon detection circuit share a first microlens, and
wherein a third photoelectric conversion unit included in the third photon detection circuit and a fourth photoelectric conversion unit included in the fourth photon detection circuit share a second microlens.

7. A photoelectric conversion device comprising:
a plurality of photon detection circuits each configured to output a pulse signal in response to incidence of a photon; and
a signal processing circuit including a plurality of counters provided corresponding to the plurality of photon detection circuits and each configured to count the pulse signal output from the corresponding photon detection circuit,
wherein the signal processing circuit is configured to output a threshold value reaching signal when a count value of any of the plurality of counters reaches a predetermined threshold value, and
wherein each of the plurality of photon detection circuits is configured to stop outputting the pulse signal in response to the threshold value reaching signal.

8. The photoelectric conversion device according to claim 7,
wherein the plurality of photon detection circuits includes a first photon detection circuit and a second photon detection circuit,
wherein the plurality of counters includes a first counter configured to count the pulse signal output from the first photon detection circuit and a second counter configured to count the pulse signal output from the second photon detection circuit,
wherein the signal processing circuit is configured to output a first signal when a count value of the first counter reaches a first threshold value and output a second signal when a count value of the second counter reaches a second threshold value, and
wherein the first photon detection circuit and the second photon detection circuit are configured to stop outputting the pulse signal when receiving the first signal or the second signal.

9. The photoelectric conversion device according to claim 8,
wherein the first photon detection circuit includes a first photoelectric conversion unit having sensitivity to a first color, and
wherein the second photon detection circuit includes a second photoelectric conversion unit having sensitivity to a second color different from the first color.

10. The photoelectric conversion device according to claim 9,
wherein the plurality of photon detection circuits further includes a third photon detection circuit including a third photoelectric conversion unit having sensitivity to a third color different from the first color and the second color,
wherein the plurality of counters further includes a third counter configured to count the pulse signal output from the third photon detection circuit,
wherein the signal processing circuit is further configured to output a third signal when a count value of the third counter reaches a third threshold value, and
wherein the first photon detection circuit, the second photon detection circuit, and the third photon detection circuit are configured to stop outputting the pulse signal when receiving any of the first signal, the second signal, and the third signal.

11. The photoelectric conversion device according to any one of claims 1 to 10,
wherein the photon detection circuit includes an avalanche photodiode, and a recharge circuit configured to return the avalanche photodiode to a state in which avalanche multiplication is possible, and
wherein the photon detection circuit is configured to stop an operation of the recharge circuit in response to the threshold value reaching signal.

12. A photodetection system comprising:
the photoelectric conversion device according to any one of claims 1 to 11; and
a signal processing device configured to process a signal output from the photoelectric conversion device.

13. The photodetection system according to claim 12, wherein the signal processing device generates a distance image representing distance information to an object based on the signal.

14. A movable object comprising:
the photoelectric conversion device according to any one of claims 1 to 11;
a distance information acquisition device configured to acquire distance information to an object from a parallax image based on a signal output from the photoelectric conversion device; and
a control device configured to control the movable object based on the distance information.

15. An equipment comprising:
the photoelectric conversion device according to any one of claims 1 to **11;** and
at least one of
an optical device corresponding to the photoelectric conversion device,
a control device configured to control the photoelectric conversion device,
a processing device configured to process a signal output from the photoelectric conversion device,
a mechanical device that is controlled based on information obtained by the photoelectric conversion device,
a display device configured to display information obtained by the photoelectric conversion device, and
a storage device configured to store information obtained by the photoelectric conversion device.
